# EUROPÄISCHE PATENTSCHRIFT

(11) **EP 3 899 344 B1**
(45) Veröffentlichungstag und Bekanntmachung des Hinweises auf die Patenterteilung: **01.02.2023**
(21) Anmeldenummer: 19832012.9
(22) Anmeldetag: 12.12.2019
(51) Int. Cl.: F16M 11/04, A47B 9/20, A47C 3/40, F16M 11/10, F16M 11/18, F16M 11/28, A47D 1/10, F16M 11/42

(54) **PLATTFORM FÜR EIN VARIABLES ANPASSBARES MÖBELSTÜCK, DERARTIGES MÖBELSTÜCK SOWIE VERFAHREN ZUM STEUERN EINES DERARTIGEN MÖBELSTÜCKES**
PLATFORM FOR A VARIABLY ADAPTABLE PIECE OF FURNITURE, SUCH A PIECE OF FURNITURE, AND METHOD FOR CONTROLLING SUCH A PIECE OF FURNITURE
PLATEFORME CONÇUE POUR UN MEUBLE ADAPTABLE DE MANIÈRE VARIABLE, MEUBLE DE CE TYPE ET PROCÉDÉ POUR COMMANDER UN TEL MEUBLE

(30) Priorität: 18.12.2018 DE 102018132690
(43) Veröffentlichungstag der Anmeldung: 27.10.2021
(73) Patentinhaber: YAASA GmbH, 8020 Graz (AT)
(72) Erfinder: EGGER, Stephan, 9042 Speicher (CH)
(74) Vertreter: Epping - Hermann - Fischer
(86) Internationale Anmeldenummer: PCT/EP2019/084956
(87) Internationale Veröffentlichungsnummer: WO 2020/126849

(56) Entgegenhaltungen:
- EP-A2- 2 626 273
- DE-A1-102014 019 752
- US-B1- 9 376 857

## Beschreibung

Die Erfindung betrifft eine Plattform für ein variabel anpassbares Möbelstück sowie ein derartiges Möbelstück. Ferner betrifft die Erfindung ein Verfahren zum Steuern eines derartigen Möbelstückes.

Aus dem Bürobereich sind elektrisch höhenverstellbare Tische bekannt. Eine besondere Ausführung dieser Tische sind höhenverstellbare Arbeitsstationen, die typischerweise Halterungen für diverse Gerätschaften, insbesondere Monitor, Computer oder Tastatur, umfassen. Aus dem Krankenhausbeziehungsweise Pflegewesen sind Pflegewagen bekannt. Sowohl Arbeitsstationen als auch Pflegewagen bieten diverse Ablagemöglichkeiten zur Ablage diverser Utensilien und Geräte. Ebenso sind aus dem Bürobereich Pulte, zum Beispiel Rednerpulte, bekannt.

Nachteilig an den diversen erläuterten Lösungen ist, dass diese nur sehr speziell in einem individuellen Arbeitsbeziehungsweise Bedienumfeld verwendbar sind. Insofern ist zum Beispiel ein Pflegewagen, der für den Krankenhausbeziehungsweise Pflegebereich konzipiert ist, als Arbeitsstation im Büroumfeld ungeeignet. Aufgrund der stetigen Wandlung und Veränderung an Bedarf und Einsatzzweck derartiger Möbelstücke besteht der Wunsch, solche Möbelstücke möglichst variabel an verschiedene Anwendungssituationen anpassen zu können.

Solche Möbelstücke sind aus US 9 376 857 B1 oder EP 626 273 A2 bekannt.

Zudem gehen die Bestrebungen dahin, Möbelstücke mit immer mehr Bedienkomfort und "Intelligenz" als sogenannte "smarte" Möbelstücke auszuführen. Auf diese Weise werden immer umfangreichere elektrische beziehungsweise elektronische Funktionalitäten in Möbelstücke integriert.

Es ist somit eine Aufgabe der Erfindung, eine Plattform, ein Möbelstück sowie ein Verfahren der eingangs genannten Art bereitzustellen, die eine flexible und variable Anpassung an eine Vielzahl unterschiedlicher Anwendungsfälle unterstützen.

Diese Aufgabe wird gemäß einem ersten Aspekt durch eine Plattform gemäß Patentanspruch 1 gelöst. Vorteilhafte Weiterbildungen sind in den Unteransprüchen offenbart.

Die Plattform weist eine Basis zum Aufstellen der Plattform auf einer Aufstellfläche, eine Säule sowie eine universelle Montagehalterung zur Montage von austauschbaren Zubehörmodulen auf. Die Säule ist mit der Basis verbunden. Die universelle Montagehalterung ist an einem von der Basis fortweisenden Ende der Säule angeordnet. Die universelle Montagehalterung weist eine mechanische Montage-Schnittstelle zum Montieren und Demontieren von austauschbaren Zubehörmodulen an der Plattform auf. Die Plattform weist eine elektrische bzw. elektronische Funktionalität auf. Die Plattform weist ferner eine Identifikations-Schnittstelle zum Identifizieren eines an der Plattform montierten Zubehörmoduls und eine Steuereinheit auf. Die Steuereinheit ist eingerichtet Identifikations-Informationen über ein an der Plattform montiertes Zubehörmodul von der Identifikations-Schnittstelle zu erhalten und eine Anpassung der elektrischen bzw. elektronischen Funktionalität der Plattform in Abhängigkeit von den erhaltenen Identifikations-Informationen zu steuern.

Durch eine derartige Plattform ist die flexible und variable Montage verschiedenster austauschbarer Zubehörmodule möglich. Durch die Montage verschiedener Zubehörmodule an der Plattform können verschiedene variabel anpassbare Möbelstücke bereitgestellt werden. Der Begriff "Plattform" bedeutet hierbei ein Grundgerüst beziehungsweise eine Grundmechanik oder ein Grundgestell, das durch verschiedene austauschbare Zubehörmodule zu verschiedenen variablen Möbelstücken erweiterbar ist.

Die Montage-Schnittstelle ist vorteilhaft derart eingerichtet, dass austauschbare Zubehörmodule auf einfache Weise, zum Beispiel (schraubenlos) mit nur einem oder wenigen Handgriffen, an der Plattform montiert oder von der Plattform demontiert werden können. Durch die Montage-Schnittstelle wird ein austauschbares Zubehörmodul stabil an der Plattform festgelegt. Hierzu kann die Montage-Schnittstelle zum Beispiel ein Spann-System, insbesondere ein Schnellspann-System, eine oder mehrere Klemmen, eine oder mehrere Magnethalterungen, oder ähnliches aufweisen. Auf diese Weise können austauschbare Zubehörmodule schnell, flexibel und einfach auf die Plattform aufgesetzt oder von dieser entfernt werden. Dennoch sind die Zubehörmodule mechanisch stabil an der Plattform festlegbar. Somit ermöglicht die Plattform eine rasche und einfache Anpassbarkeit an verschiedenste Anwendungsfälle, wobei durch Austauschen verschiedener Zubehörmodule an der Plattform verschiedene Funktionalitäten des auf diese Weise bereitgestellten Möbelstücks unterstützt werden.

Die Plattform ermöglicht des Weiteren eine Erkennung eines an der Plattform montierten Zubehörmoduls über die Identifikations-Schnittstelle. Vorteilhaft können auf diese Weise verschiedene Zubehörmodule identifiziert werden. Anhand des jeweils montierten und identifizierten Zubehörmoduls kann eine automatische Anpassung bzw. Änderung der elektrischen Funktionalität der Plattform erfolgen. Dies umfasst z.B. die Anpassung oder Änderung von Parametern, Betriebsmodi oder Einstellungen der elektrischen Funktionalität, das Aufrufen oder Einstellen von gespeicherten Parametern, Betriebsmodi oder Einstellungen sowie das Ersetzen eingestellter Parameter, Betriebsmodi oder Einstellungen mit neuen Parametern, Betriebsmodi oder Einstellungen.

Zum Beispiel kann anhand des jeweils montierten und identifizierten Zubehörmoduls die elektrische Funktionalität der Plattform in Form einer Anzeige oder eines Displays, in Form einer Kühlung oder Heizung des Zubehörmoduls (über eine entsprechende Kühl- oder Heizeinheit der Plattform), in Form einer elektrischen Energieversorgung (z.B. Stromsparzustände oder ähnliches) oder in Form einer Höhenverstellbarkeit oder automatischen Höhenverstellung gesteuert bzw. angepasst werden.

Die erläuterte Plattform erlaubt somit über die Montagehalterung verschiedene Zubehörmodule mit der Plattform zu koppeln. Dadurch ist eine variable und individuelle Anpassbarkeit eines mit der Plattform ausgestatteten Möbelstückes an verschiedene unterschiedliche Anwendungsfälle ermöglicht. Die Plattform ermöglicht des Weiteren über die automatische Anpassung bzw. Änderung der elektrischen Funktionalität der Plattform in Abhängigkeit von dem verwendeten und automatisch erkannten Zubehörmodul eine automatische Anpassbarkeit an spezielle Bedien- und Arbeitssituationen bei dennoch einfacher, flexibler und sicherer Handhabung. Auf diese Weise sind variable intelligente (smarte) Möbelstücke vermittels der Plattform einfach konfigurierbar und anpassbar.

In verschiedenen Ausführungsformen ist die Identifikations-Schnittstelle elektrisch, mechanisch oder elektromechanisch ausgeführt. Die Identifikations-Schnittstelle weist hierbei eine oder mehrere Identifizierungs- oder Dekodiereinheiten auf zum Erkennen bzw. Dekodieren von entsprechenden Identifizierungs- oder Kodiermerkmalen eines jeweiligen austauschbaren Zubehörmoduls.

Im Falle eines elektrischen Aufbaus weist die Identifikations-Schnittstelle z.B. eine elektrische oder elektronische Identifizierungs- oder Dekodiereinheit zum elektrischen Erfassen, Erkennen oder Auslesen von elektrischen Identifizierungs- oder Kodiermerkmalen eines austauschbaren Zubehörmoduls auf. Die Identifikations-Schnittstelle kann als elektrische Steckverbindung oder als induktive, elektromagnetische Schnittstelle eingerichtet sein, wobei eine elektrische Erfassung von Identifizierungs- oder Kodiermerkmalen des Zubehörmoduls elektromagnetisch erfolgt. Alternativ oder ergänzend kann die Identifikations-Schnittstelle als kapazitive Schnittstelle eingerichtet sein. Die Identifikations-Schnittstelle kann auch als Nahfeld-Kommunikations-Schnittstelle, zum Beispiel als NFC-Schnittstelle (NFC bedeutet engl. "Near Field Communication") eingerichtet sein. Weiter alternativ kann die Identifikations-Schnittstelle auch als elektronische, z.B. optoelektronische, Schnittstelle zum Erfassen und Wandeln mechanischer Identifizierungs- oder Kodiermerkmale eines austauschbaren Zubehörmoduls in elektrische Identifizierungs- oder Kodiermerkmale eingerichtet sein.

Im Falle eines mechanischen Aufbaus weist die Identifikations-Schnittstelle z.B. eine mechanische Identifizierungs- oder Dekodiereinheit zum mechanischen Erfassen oder Erkennen von Identifizierungs- oder Kodiermerkmalen eines austauschbaren Zubehörmoduls auf. Zum Beispiel kann die Identifikations-Schnittstelle eine oder mehrere mechanische Stecker oder Kupplungen oder sonstige Kodiermittel (z.B. Pins oder Stifte) aufweisen, die je nach Steck-, Kupplungs- oder Verbindungs-Verhalten eines austauschbaren Zubehörmoduls bei der Montage des Zubehörmoduls mechanisch unterschiedlich reagieren. Diese mechanischen Identifizierungs- oder Kodiermerkmale können dann über eine separate Verarbeitungseinheit in elektrische Identifizierungs- oder Kodiermerkmale gewandelt werden.

Im Falle eines elektromechanischen Aufbaus kann die Identifikations-Schnittstelle auch eine Kombination der oben erläuterten elektrischen/elektronischen oder mechanischen Konstruktionen aufweisen.

Die über die Identifikations-Schnittstelle erzeugten bzw. erkannten elektrischen, mechanischen oder elektromechanischen Identifizierungs- oder Kodiermerkmale eines mit der Plattform gekoppelten Zubehörmoduls können über die Identifikations-Schnittstelle selbst oder über eine nachgeschaltete Verarbeitungseinheit in elektrische Identifikations-Informationen umgewandelt werden, die der Steuereinheit zur Verfügung gestellt werden. In alternativen Ausführungen und Implementierungen können die Identifizierungs- oder Kodiermerkmale selbst bereits die entsprechenden Identifikations-Informationen darstellen.

In diversen Ausführungsformen können die Identifikations-Schnittstelle und die Steuereinheit in separaten Komponenten eingerichtet und implementiert sein. Alternativ können die Identifikations-Schnittstelle und die Steuereinheit als eine einheitliche Baugruppe mit entsprechender Logik aufgebaut sein.

In diversen Ausführungsformen sind die Montage-Schnittstelle und die Identifikations-Schnittstelle der universellen Montagehalterung derart eingerichtet, ausgeführt und/oder an der universellen Montagehalterung positioniert, dass durch Montieren eines austauschbaren Zubehörmoduls an der Plattform vermittels der Montage-Schnittstelle automatisch eine Identifikation eines an der Plattform montierten Zubehörmoduls mittels der Identifikations-Schnittstelle erfolgt bzw. durchführbar ist. Im Falle einer mechanischen oder elektromechanischen Ausführung der Identifikations-Schnittstelle kann diese mit ihren mechanischen Komponenten in der Montage-Schnittstelle integriert sein. Alternativ stellt die Identifikations-Schnittstelle eine separate Mechanik bereit.

In diversen Ausführungsformen umfasst die elektrische Funktionalität (alternativ oder ergänzend zu anderen elektrischen Funktionen) der Plattform eine elektrische Höhenverstellbarkeit der Säule. Die Steuereinheit ist dabei eingerichtet, die elektrische Höhenverstellbarkeit der Säule in Abhängigkeit von den erhaltenen Identifikations-Informationen anzupassen.

In einigen Ausführungsformen ist die Steuereinheit z.B. eingerichtet, eine oder mehrere der folgenden Funktionen der elektrischen Höhenverstellbarkeit der Säule in Abhängigkeit von den erhaltenen Identifikations-Informationen zu steuern bzw. anzupassen:
- Aktivieren oder Deaktivieren einer Sperre der Höhenverstellung der Säule,
- Vorgeben oder Ändern einer definierten Sicherheits- oder Stop-Position (die z.B. elektrisch oder optisch erfasst wird) oder
- Vorgeben oder Ändern einer maximalen oder minimalen Höhe der Säule.

In alternativen oder ergänzenden Ausführungsformen ist die Steuereinheit eingerichtet, eine automatische Höhenanpassung der Säule in Abhängigkeit von den erhaltenen Identifikations-Informationen zu steuern. Dadurch kann eine automatische Ansteuerung einer Höhenverstellung der elektrisch höhenverstellbaren Säule erfolgen.

Sämtliche Ausführungsformen, in denen eine Höhenverstellbarkeit bzw. eine aktive Höhenverstellung der Säule mittels der Steuereinheit anhand der Identifikations-Informationen steuerbar oder anpassbar ist, haben folgende Vorteile. Wird beispielsweise ein Zubehörmodul über die Montage-Schnittstelle der Montagehalterung an der Plattform montiert, das eine spezielle Höhe der Plattform erfordert (z.B. eine Präsentationshöhe für ein Whiteboard, Pinboard, Display, TV, etc.), so kann die Steuereinheit automatisch Funktionen, Parameter, Einstellungen oder Betriebsmodi der Höhenverstellbarkeit (wie oben erläutert) für dieses Zubehörmodul vorgeben oder ändern oder z.B. aktiv ein Verfahren der Säule in die gewünschte Präsentationshöhe steuern. Wird dagegen beispielsweise ein Zubehörmodul über die Montage-Schnittstelle der Montagehalterung an der Plattform montiert, das eine niedrigere Bedien- oder Arbeitshöhe erfordert (z.B. eine Höhe für eine Tischplatte oder einen Stuhl), so kann die Steuereinheit automatisch Funktionen, Parameter, Einstellungen oder Betriebsmodi der Höhenverstellbarkeit (wie oben erläutert) für dieses andere Zubehörmodul vorgeben oder ändern oder z.B. aktiv ein Verfahren der Säule in diese gewünschte niedrigere Bedien- oder Arbeitshöhe steuern. Die jeweils gewünschte Höhe oder verschiedene Funktionen, Parameter, Einstellungen oder Betriebsmodi der Höhenverstellbarkeit können für verschiedene Zubehörmodule vorgegeben, z.B. in einem logischen Datenspeicher der Plattform gespeichert und/oder über eine Programmlogik programmiert sein.

Eine automatische Anpassung der Höhenverstellbarkeit der erläuterten Art in Abhängigkeit von einem jeweils mit der Plattform gekoppelten Zubehörmodul hat daher auch den Vorteil, dass eine sichere Einstellung vorgenommen werden kann, ohne dass ein Benutzer oder die Plattform selbst Schaden nehmen. Zum Beispiel kann auf diese Weise verhindert werden, dass ein senkrecht verwendetes plattenförmiges Zubehörmodul in eine zu geringe Arbeitshöhe gebracht wird und an der Basis der Plattform anschlägt oder einen Benutzer einklemmt oder dergleichen.

In diversen Ausführungsformen der Plattform weist die universelle Montagehalterung zusätzlich eine elektrische Anbindungs-Schnittstelle zum elektrischen Anbinden austauschbarer Zubehörmodule an die Plattform auf. Die Montage-Schnittstelle und die Anbindungs-Schnittstelle der universellen Montagehalterung sind z.B. derart eingerichtet, ausgeführt und/oder an der universellen Montagehalterung positioniert, dass durch Montieren eines austauschbaren Zubehörmoduls an der Plattform vermittels der Montage-Schnittstelle automatisch eine elektrische Verbindung des austuschbaren Zubehörmoduls mit der Anbindungs-Schnittstelle herstellbar ist.

Die Anbindungs-Schnittstelle ist vorteilhaft derart eingerichtet, dass ein austauschbares Zubehörmodul auf einfache Weise an eine Elektrik beziehungsweise Elektronik der Plattform angebunden werden kann. Die Plattform ist dabei vorteilhaft derartig ausgeführt, dass durch mechanisches Festlegen eines austauschbaren Zubehörmoduls vermittels der mechanischen Montage-Schnittstelle automatisch eine elektrische Verbindung des austauschbaren Zubehörmoduls mit der Anbindungs-Schnittstelle herstellbar ist. Dies bedeutet nicht zwangsläufig, dass ein jedes austauschbares Zubehörmodul, das mit der Plattform verwendbar ist, eine elektrische Funktionalität umfassen muss. Es können auch austauschbare Zubehörmodule mit rein mechanischer Funktionalität an die Plattform montiert werden. Wesentlich ist, dass die Plattform selbst die Funktionalität bereitstellt, dass durch mechanisches Montieren eines Zubehörmoduls automatisch eine elektrische Anbindung des Zubehörmoduls möglich ist.

Die Anbindungs-Schnittstelle umfasst zum Beispiel einen elektrischen Stecker mit elektrischen Kontakten zum Zusammenwirken mit elektrischen Kontakten eines Gegensteckers an einem zu montierenden austauschbaren Zubehörmodul (Stecker-Kupplungssystem). Alternativ oder ergänzend kann die Anbindungs-Schnittstelle auch zur galvanisch getrennten bzw. drahtlosen elektrischen Verbindung mit einem austauschbaren Zubehörmodul eingerichtet sein. Zum Beispiel kann die Anbindungs-Schnittstelle als induktive, elektromagnetische Schnittstelle eingerichtet sein, wobei eine elektrische Verbindung zwischen der Plattform und einem austauschbaren Zubehörmodul elektromagnetisch erfolgt. Die Anbindungs-Schnittstelle kann weiter alternativ auch als kapazitive Schnittstelle eingerichtet sein. Die Anbindungs-Schnittstelle kann auch als Nahfeld-Kommunikations-Schnittstelle, zum Beispiel als NFC-Schnittstelle (NFC bedeutet engl. "Near Field Communication") eingerichtet sein. Im Falle einer galvanisch getrennten Verbindung der erläuterten Art kann die Anbindungs-Schnittstelle eine Energieübertragungseinheit, insbesondere Sende-/Empfangseinheit (zum Beispiel Spule) aufweisen, während ein entsprechendes austauschbares Zubehörmodul eine entsprechende komplementäre Energieübertragungseinheit, insbesondere Sende-/Empfangseinheit (komplementäre Spule), aufweisen kann. Somit bildet die Anbindungs-Schnittstelle im Falle einer galvanisch getrennten Konfiguration mit einem austauschbaren Zubehörmodul, das entsprechend konfiguriert ist, ein drahtloses Energieübertragungssystem. In diversen Ausführungsformen ist die Anbindungs-Schnittstelle separat zur Identifikations-Schnittstelle eingerichtet. In alternativen Ausführungsformen sind die Anbindungs-Schnittstelle und die (elektrische oder elektromechanische) Identifikations-Schnittstelle als kombinierte Schnittstelle zusammengefasst. In diesem Falle stellt eine elektrische Schnittstelle und deren elektrische bzw. elektronische Komponenten sowohl eine Identifikation als auch eine elektrische Anbindung eines entsprechenden Zubehörmoduls an die Plattform bereit.

Auf diese Weise ist die Plattform eingerichtet, ein austauschbares Zubehörmodul über die Anbindungs-Schnittstelle elektrisch mit der Plattform zu verbinden. Vorzugsweise sind die Montage-Schnittstelle und die Anbindungs-Schnittstelle derart an der Plattform beziehungsweise derart zueinander konfiguriert und positioniert, dass durch Montieren eines Zubehörmoduls dieses automatisch elektrisch angebunden wird. Auf diese Weise sind für eine elektrische Verbindung des Zubehörmoduls keine zusätzlichen Handgriffe neben einem oder mehreren Handgriffen zum mechanischen Montieren des Zubehörmoduls notwendig. Zum Beispiel kann ein separates Verbinden entsprechender Stecker zwischen dem Zubehörmodul und der Anbindungs-Schnittstelle neben einem Montieren des Zubehörmoduls entfallen. Vorteilhaft ist die Anbindungs-Schnittstelle bezüglich der Montage-Schnittstelle derart an der universellen Halterung angeordnet, dass bei einem montierten Zubehörmodul die Anbindungs-Schnittstelle zwischen der universellen Montagehalterung und dem Zubehörmodul verdeckt ist. Dies hat den Vorteil, dass jegliche Elektrik beziehungsweise Elektronik zwischen dem Zubehörmodul und der universellen Montagehalterung geschützt vor der Außenwelt ist. Die Montage-Schnittstelle und die Anbindungs-Schnittstelle (und ggf. auch die Identifikations-Schnittstelle) können auch als kombinierte Schnittstelle der universellen Montagehalterung eingerichtet sein. Auf diese Weise ist durch einen Schnittstellenmechanismus gleichzeitig eine mechanische als auch eine elektrische Anbindung eines austauschbaren Zubehörmoduls und ggf. dessen automatische Erkennung möglich.

Die erläuterte Plattform ermöglicht somit über die Montage-Schnittstelle in Verbindung mit der Anbindungs-Schnittstelle und ggf. in Verbindung mit der Identifikations-Schnittstelle eine variable mechanische als auch elektrische Anpassbarkeit bei dennoch einfacher und flexibler Handhabung.

In diversen Ausführungsformen der Plattform ist die Säule bei aufgestellter Plattform senkrecht zur Aufstellfläche angeordnet und teleskopisch höhenverstellbar. Bei aufgestellter Plattform ist die Basis auf der Aufstellfläche aufgestellt, wobei die Säule senkrecht zur Aufstellfläche nach oben ragt. Am oberen, von der Basis fortweisenden Ende ist die universelle Montagehalterung mit der Montage-Schnittstelle und der Identifikations-Schnittstelle und ggf. der elektrischen Anbindungs-Schnittstelle eingerichtet. Die Säule kann zentral (mittig) an der Basis der Plattform festgelegt sein. Für eine teleskopische Höhenverstellung umfasst die Säule z.B. zwei oder drei ineinander fahrbare, zum Beispiel ineinander geschobene, Rohre. Es kann aber auch eine Vielzahl (mehr als drei) an Rohren verwendet werden, um eine Säule mit einem hohen Hub bei gleichzeitig kleiner Baugröße einzurichten.

In diversen Ausführungsformen ist in der Säule ein elektrischer Antrieb zur elektrischen (elektromotorischen) Höhenverstellung der Säule integriert. Der elektrische Antrieb kann zum Beispiel einen Linearaktuator beziehungsweise Linearmotor umfassen. Der elektrische Antrieb ist vorteilhaft an die gewünschte bzw. erforderliche Hubkraft angepasst. Ferner kann ein für den gewünschten Hubweg und/oder die gewünschte Hubkraft ausgelegtes Getriebe eingerichtet sein. Zum manuellen Steuern/Bedienen des elektrischen Antriebs können zum Beispiel ein oder mehrere Bedienelemente oder Steuerelemente an oder in der Säule oder an oder in der universellen Montagehalterung integriert sein. Alternativ oder ergänzend umfasst die Anbindungs-Schnittstelle der universellen Montagehalterung eine oder mehrere Steuerleitungen zum Anbinden eines oder mehrerer Bedienelemente oder Steuerelemente, die in einem entsprechenden zu montierenden austauschbaren Zubehörmodul integriert sind. Zum Beispiel kann ein solches Zubehörmodul auf der Plattform montiert werden, wobei eine elektrische Anbindung eines Bedienelementes am Zubehörmodul an die Anbindungs-Schnittstelle der Plattform erfolgt, sodass über das Bedienelement am Zubehörmodul der elektrische Antrieb der Säule gesteuert werden kann. Hier sind verschiedene variable Konfigurationen denkbar.

In diversen Ausführungsformen weist die Plattform eine Sicherung zum Sperren beziehungsweise Freigeben der elektrischen Funktionalität, z.B. der elektrischen Höhenverstellbarkeit oder Höhenverstellung der Säule, auf. Die Sicherung weist z.B. ein Kontaktelement auf zum Zusammenwirken mit einem Gegenkontaktelement zum Freigeben oder Sperren der elektrischen Funktionalität der Plattform. Beispielsweise ist eine entsprechende Sicherung dadurch realisiert, dass eine Benutzer-Karte (Smartcard) ein Kontaktelement aufweist und bei Einstecken oder Kontakt der Benutzer-Karte in eine oder mit einer entsprechenden Vorrichtung an der Plattform das Kontaktelement mit einem Gegenkontaktelement zusammenwirkt zum Freigeben oder Sperren der elektrischen Funktionalität. Ein Zusammenwirken der Kontaktelemente kann zum Beispiel elektrisch und/oder magnetisch und/oder mechanisch erfolgen.

In diversen Ausführungsformen weist die Plattform einen Akku (Akkumulator, Batterie) zur elektrischen Energieversorgung der Plattform, insbesondere zur Versorgung der elektrischen Funktionalität der Plattform mit elektrischer Energie, und/oder zur elektrischen Energieversorgung eines an der Plattform montierten austauschbaren Zubehörmoduls auf. Der Akku kann zum Beispiel an oder in der Säule oder an oder in der Basis der Plattform eingerichtet sein. In einer Ausführungsform kann der Akku auch als austauschbarer Akku eingerichtet sein.

Derartige Ausführungen haben den Vorteil, dass die Plattform mobil gestaltet werden kann. Die Plattform ist auf diese Weise unabhängig von einer kabelgebundenen externen Stromversorgung, soweit die Energiereserven des Akkus für einen Betrieb der Plattform ausreichen. Zum Aufladen des Akkus können zum Beispiel Anschlüsse an der Plattform zum Anschließen an ein Stromnetz vorgesehen sein. Alternativ kann ein Aufladen des Akkus zum Beispiel durch ein induktives Ladesystem realisiert sein. Dabei kann die Plattform mit ihrer Basis mit einem auf der Aufstellfläche liegenden, in der Aufstellfläche integrierten oder zum Beispiel in einer Matte integrierten Ladeadapter gekoppelt werden. Aufgrund der Energieversorgung über Akku ist die Plattform sehr gut mobil einsetzbar und kann zum Beispiel zwischen verschiedenen Räumen transportiert werden, ohne eine kabelgebundene externe Stromversorgung umstecken zu müssen. Gerade für ein mobiles variables Möbelstück ist die Plattform somit vorteilhaft konfiguriert.

Im Falle einer elektrisch höhenverstellbaren Säule der oben erläuterten Art kann die Energie des Akkus primär für den elektrischen Antrieb zur Höhenverstellung verwendet werden. Alternativ oder ergänzend kann in Ausführungsformen der Plattform mit einer elektrischen Anbindungs-Schnittstelle der erläuterten Art auch die Energieversorgung eines an der Plattform montierten austauschbaren Zubehörmoduls mit elektrischer Funktionalität vermittels der Anbindungs-Schnittstelle der universellen Montagehalterung erfolgen. Hierbei kann die Energie aus dem Akku zum Beispiel ein Gerät beziehungsweise eine Funktionalität des Zubehörmoduls versorgen. Beispielsweise ist am Zubehörmodul eine Lampe eingerichtet, die über den Akku versorgt werden kann. Weiterhin kann das Zubehörmodul neben einer Ablagefläche zum Beispiel auch eine induktive Lademöglichkeit für ein auf dem Zubehörmodul abgelegtes Gerät, wie Laptop oder Smartphone oder Tablet-Computer aufweisen, wobei die zur Versorgung dieses Geräts notwendige Energie wiederum aus dem Akku gespeist werden kann. Eine Energieübertragung erfolgt in diesem Fall zwischen dem Akku, der Anbindungs-Schnittstelle der universellen Montagehalterung hin zum Zubehörmodul und vom Zubehörmodul über eine entsprechende Energieübertragung hin zum gekoppelten Gerät. Der Akku stellt somit eine mobile Zusatzbatterie zur Energieversorgung elektrischer Funktionalitäten oder Geräte bereit, die mit einem entsprechenden Zubehörmodul gekoppelt sind oder an dem Zubehörmodul eingerichtet sind.

In diversen Ausführungsformen weist die Basis zumindest drei Füße auf. In speziellen Ausführungsformen ist an wenigstens zwei der Füße jeweils eine Rolle angeordnet. Diese dient zum Verschieben der Plattform auf der Aufstellfläche. Eine Konfiguration mit Rollen begünstigt eine Mobilität der Plattform zusätzlich. Die Plattform kann auf einfache Weise im Raum verschoben werden.

In alternativen Ausführungsformen sind die Füße ohne Rollen eingerichtet. Hier können zum Beispiel Bodengleiter eingesetzt werden, um beim Verschieben der Plattform keinen Schaden auf der Aufstellfläche zu verursachen.

In diversen Ausführungsformen der Plattform sind die Füße der Basis jeweils als von einer Verbindung mit der Säule fortweisende Schenkel mit gleicher Schenkellänge ausgeführt. Das bedeutet, dass sämtliche Füße jeweils die gleiche Schenkellänge aufweisen. Ein oder mehrere Füße sind vorteilhaft relativ zu einem oder mehreren anderen Füßen um eine Achse senkrecht zur Aufstellfläche (bei aufgestellter Plattform) schwenkbar. Durch Schwenken eines oder mehrerer Füße relativ zu anderen Füßen kann zwischen einer relativ breiten und einer relativ schmalen Aufstellung der Plattform gewechselt werden. Für eine platzsparende Anordnung können die Füße zum Beispiel derart geschwenkt werden, dass zumindest zwei Füße mit ihren Schenkeln einen sehr kleinen Winkel (zum Beispiel < 15°) aufspannen. Die Füße können vorzugsweise derart verschwenkt werden, dass sämtliche Schenkel der Füße nahezu parallel zueinander ausgerichtet sind. Auf diese Weise kann die Plattform zum Beispiel an sehr schmalen Stellen positioniert werden, zum Beispiel in einer Nische. Bei dieser platzsparenden Anordnung spannen die Füße aber immer noch eine Standfläche auf, die genügend Stabilität bietet, damit die Plattform aufgestellt bleibt. Die platzsparende Anordnung der Füße der erläuterten Art hat auch den Vorteil, dass in bestimmten Anwendungssituationen die Füße derart orientiert werden können, dass sie einen Benutzer der Plattform nicht behindern.

In einer anderen Ausrichtung der Füße können diese relativ zueinander derart geschwenkt beziehungsweise orientiert werden, dass die Füße zueinander maximal große Winkel (zum Beispiel 80° bis 120°)aufspannen. In einer derartigen Ausrichtung sorgen die Füße für eine maximal stabile Standfläche der Plattform.

In alternativen Ausführungen der Plattform sind die Füße fest an der Säule montiert und nicht relativ zueinander schwenkbar. In diesen Ausführungen kann die Basis zum Beispiel als Fußkreuz eingerichtet sein, das wenigstens drei Füße hat.

In diversen Ausführungsformen ist die universelle Montagehalterung schwenkbar an der Säule angeordnet. Hierzu kann an der Säule ein Gelenk vorgesehen sein, über das die universelle Montagehalterung schwenkbar an der Säule gehalten wird. Die universelle Montagehalterung kann derart schwenkbar sein, dass sie um eine horizontale Achse (das heißt um eine Achse parallel zur Aufstellfläche bei aufgestellter Plattform) schwenkbar ist. Alternativ oder zusätzlich kann die universelle Montagehalterung auch in einer zur horizontalen Achse senkrechten, vertikalen Achse (zum Beispiel um eine Achse senkrecht zur Aufstellfläche bei aufgestellter Plattform) schwenkbar sein. Eine Ausrichtung um eine derartige vertikale Achse kann bei Ausführung der Plattform mit Füßen, an denen Rollen montiert sind, alternativ oder ergänzend auch über diese Rollen erfolgen.

Die universelle Montagehalterung kann derart schwenkbar eingerichtet sein, dass ein Kippen von einer im Wesentlichen waagrechten Ausrichtung (0°, Hauptabmessung der universellen Montagehalterung im Wesentlichen parallel zur Aufstellfläche) in eine im Wesentlichen senkrechte Position (ca. 90°, Hauptabmessung der universellen Montagehalterung im Wesentlichen senkrecht zur Aufstellfläche) möglich ist. Zwischen diesen beiden Positionen kann die universelle Montagehalterung jegliche Zwischenpositionen annehmen. Insofern ist die Plattform, genauer gesagt, die universelle Montagehalterung, sehr flexibel positionierbar für verschiedenste Anwendungsfälle in Kombination mit einem austauschbaren Zubehörmodul als flexibles Möbelstück. Die universelle Montagehalterung kann auch lösbare Rastmittel (z.B. eine Zahnrad-Kupplung mit der Säule) aufweisen, um die universelle Montagehalterung in verschiedenen Winkelpositionen stabil und sicher zu halten und bezüglich der Säule der Plattform zu verrasten. Durch einfaches Lösen und Arretieren der Rastmittel kann die Montagehalterung variabel in verschiedenen Winkelstellungen bezüglich der Säule festgelegt werden.

In alternativen Ausführungsformen ist die universelle Montagehalterung bei aufgestellter Plattform bezüglich der Aufstellfläche horizontal oder vertikal in ihrer Hauptabmessung fest an der Säule angeordnet. In diesen Ausführungsformen ist die universelle Montagehalterung nicht schwenkbar bezüglich der Säule. Eine horizontale Anordnung der Hauptabmessung der universellen Montagehalterung kann zum Beispiel für sämtliche Tisch- beziehungsweise Abstell- oder Arbeitsflächen-Anwendungen verwendet werden. Eine vertikale Orientierung der Hauptabmessung der universellen Montagehalterung kann zum Beispiel für Anwendungen einer Halterung von Rahmen, Bildschirmen, Displays, Whiteboards, Pinboards oder ähnliches verwendet werden.

In diversen Ausführungsformen weist die universelle Montagehalterung eine Kopplungs-Schnittstelle zum mechanischen und/oder elektrischen Koppeln mit einer weiteren universellen Montagehalterung einer weiteren Plattform auf. Dies hat den Vorteil, dass mehrere universelle Montagehalterungen verschiedener Plattformen beziehungsweise mehrere Plattformen an sich mechanisch und/oder elektrisch gekoppelt werden können, um den Funktionsumfang der Plattform beziehungsweise eines mit der Plattform aufgebauten Möbelstückes zusätzlich zu erweitern. Auf diese Weise können zwei oder mehrere Plattformen über ihre universellen Montagehalterungen gekoppelt werden, sodass zum Beispiel ein Arbeitstisch mit zwei Plattformen aufgebaut werden kann. Im Falle einer elektrischen Funktionalität erlaubt eine elektrische Kopplung mehrerer Montagehalterungen zum Beispiel eine Synchronisation einer Signalkommunikation beziehungsweise einen Austausch von Kommunikationssignalen zwischen den beteiligten Plattformen, zum Beispiel zum synchronen elektrischen Höhenverstellen der jeweiligen Säulen der Plattform (siehe obige Erläuterungen). Eine mechanische Kopplung mehrerer Plattformen kann zum Beispiel vorteilhaft erfolgen, um eine mechanische Stabilität für bestimmte Anwendungsfälle zu erhöhen. Eine elektrische Kopplung mehrerer Plattformen kann über Steckverbindungen entsprechender Steckkontakte oder auch drahtlos bzw. berührungslos (z.B. induktiv oder kapazitiv) erfolgen.

Die Montage-Schnittstelle, die Identifikations-Schnittstelle und/oder die Anbindungs-Schnittstelle der universellen Montagehalterung können derart eingerichtet sein, dass sie neben den Funktionen der oben erläuterten Art gleichzeitig die Funktionalität der Kopplungs-Schnittstelle bereitstellen. Alternativ kann die Kopplungs-Schnittstelle separat von der Montage-Schnittstelle, der Identifikations-Schnittstelle beziehungsweise von der Anbindungs-Schnittstelle an der universellen Montagehalterung eingerichtet sein. Weiter alternativ ist die Kopplungs-Schnittstelle an anderer Stelle der Plattform, zum Beispiel an oder in der Säule oder an oder in der Basis integriert.

Die obige Aufgabe wird gemäß einem zweiten Aspekt durch ein variabel anpassbares Möbelstück nach Patentanspruch 12 gelöst. Vorteilhafte Weiterbildungen sind in den Unteransprüchen offenbart.

Das variabel anpassbare Möbelstück weist eine Plattform der oben erläuterten Art und ein austauschbares Zubehörmodul auf. Das Zubehörmodul ist vermittels der Montage-Schnittstelle an der universellen Montagehalterung der Plattform montiert oder montierbar.

Auch ein derartiges variabel anpassbares Möbelstück weist die im Zusammenhang mit der oben erläuterten Plattform genannten Vorteile auf. Das Zubehörmodul kann verschiedenste Funktionalitäten, sowohl mechanischer als auch elektrischer Natur, aufweisen.

In diversen Ausführungsformen des variabel anpassbaren Möbelstückes weist das austauschbare Zubehörmodul wenigstens eine der folgenden Funktionen auf:
- Zubehörmodul mit einer planen Arbeitsfläche (zum Beispiel für einen einfachen Tisch oder eine Arbeitsplatte,
- Zubehörmodul mit einer Halterung für ein Buch, Tablet-Computer oder Smartphone (zum Beispiel einfache Kante),
- Zubehörmodul mit einem translatorisch und/oder rotatorisch bewegbaren Oberflächenelement (zum Beispiel Beistelltisch),
- Zubehörmodul mit einer Halterung gemäß einem Standard der Video Electronics Standards Association (VESA), zum Beispiel als Monitor- oder TV-Halterung,
- Zubehörmodul mit einer mechanischen Halterung für daran montierbare Gegenstände, wie zum Beispiel Lautsprecher, Mikrofone, Beleuchtungskörper, Lampen, Displays, Kameras, Getränkehalter, Stifteköcher, Schalen, Computerperipheriegeräte, Tastaturauflagen oder ähnliches,
- Zubehörmodul mit einer elektrischen Zubehör-Schnittstelle zum Anschließen oder Koppeln elektrischer Geräte, zum Beispiel USB- oder HDMI-Schnittstelle oder ähnliches oder Sende-/Empfangseinheit für eine Drahtlos-Kommunikation zum Beispiel mit einer Fernbedienung oder einem Smartphone/Tablet-Computer,
- Zubehörmodul mit einer Kopplungs-Schnittstelle zum mechanischen und/oder elektrischen Koppeln mit einem weiteren Zubehörmodul, wobei die Kopplungs-Schnittstelle zum Beispiel gemäß der oben erläuterten Art eingerichtet ist,
- Zubehörmodul mit integriertem Whiteboard,
- Zubehörmodulmit integriertem Display, insbesondere integriertem Touch-Display,
- Zubehörmodul mit integriertem, elektrischem Bedien- oder Steuerelement, zum Beispiel Schalter für eine elektrische Höhenverstellung der Säule der Plattform,
- Zubehörmodul, das als Sitz oder Sessel ausgeführt ist.

Das austauschbare Zubehörmodul kann eine oder mehrere (Kombination) der oben erläuterten Funktionalitäten aufweisen, soweit sinnvoll realisierbar. Auf diese Weise ist das Möbelstück für völlig unterschiedliche Anwendungsfälle anpassbar.

Ein variabel anpassbares Möbelstück der erläuterten Art kann vorteilhaft mit einer Vielzahl weiterer austauschbarer Zubehörmodule der oben erläuterten Art als Set zusammengestellt sein. Jedes der Zubehörmodule ist vermittels der Montage-Schnittstelle an der universellen Montagehalterung der Plattform montierbar. Das Set kann auch mehrere Plattformen der erläuterten Art aufweisen. Vorteilhaft umfassen die Zubehörmodule verschiedene der oben erläuterten Funktionen, sodass durch das Set für verschiedene unterschiedliche Anwendungsfälle funktionsgerechte Möbelstücke vermittels der einen oder mehreren Plattformen eingerichtet werden können.

Die obige Aufgabe wird gemäß einem dritten Aspekt durch ein Verfahren nach Patentanspruch 15 zum Steuern eines variabel anpassbaren Möbelstückes der oben erläuterten Art gelöst. Hierbei identifiziert die Identifikations-Schnittstelle der Plattform das an der Plattform montierte Zubehörmodul automatisch. Die Steuereinheit erhält mittels der Identifikations-Schnittstelle erfasste Identifikations-Informationen über das an der Plattform montierte Zubehörmodul. Die Steuereinheit steuert eine Anpassung der elektrischen Funktionalität der Plattform in Abhängigkeit von den erhaltenen Identifikations-Informationen. Auch durch ein solches Verfahren ergeben sich die oben erläuterten Vorteile.

Sämtliche vorteilhaften Aspekte, Merkmale und Implementierungen der oben erläuterten Plattform finden analog Berücksichtigung bei dem weiter erläuterten variabel anpassbaren Möbelstück mit einer solchen Plattform beziehungsweise bei einem weiter erläuterten Set mit einem variabel anpassbaren Möbelstück und einer Vielzahl austauschbarer Zubehörmodule. Ferner finden sämtliche vorteilhaften Aspekte, Merkmale und Implementierungen der oben erläuterten Plattform, des oben erläuterten variabel anpassbaren Möbelstücks sowie des erläuterten Set mit einem variabel anpassbaren Möbelstück und einer Vielzahl austauschbarer Zubehörmodule Berücksichtigung oder Niederschlag in entsprechenden Aspekten, Merkmalen und Implementierungen bei dem weiter erläuterten Verfahren zum Steuern eines variabel anpassbaren Möbelstücks und umgekehrt.

Die Erfindung wird nachfolgend anhand von verschiedenen Ausführungsformen unter Zuhilfenahme mehrerer Zeichnungen näher erläutert.

Es zeigen:
Figur 1 eine erste Ausführungsform einer Plattform gemäß der Erfindung,
Figur 2 eine Ausführungsform eines austauschbaren Zubehörmoduls für eine Plattform gemäß Figur 1,
Figur 3 eine erste Ausführungsform eines Möbelstücks mit der Plattform gemäß Figur 1 und einem daran montierten Zubehörmodul gemäß Figur 2,
Figur 4 eine zweite Ausführungsform eines Möbelstücks mit der Plattform gemäß Figur 1 und einem daran montierten Zubehörmodul gemäß einer weiteren Ausführungsform,
Figur 5 eine elektrische Energieversorgung am Möbelstück gemäß Figur 3,
Figur 6 eine Ausführungsform der elektrischen Energieversorgung gemäß Figur 5,
Figur 7 die Ausführungsform des Möbelstücks gemäß Figur 3 mit einer ersten Konfiguration einer Basis,
Figur 8 die Ausführungsform des Möbelstücks gemäß Figur 3 mit einer zweiten Konfiguration der Basis,
Figur 9 eine dritte Ausführungsform eines Möbelstücks mit einer Plattform und einem austauschbaren Zubehörmodul,
Figur 10 eine vierte Ausführungsform eines Möbelstücks mit einer Plattform und einem austauschbaren Zubehörmodul,
Figur 11 eine fünfte Ausführungsform eines Möbelstücks mit einer Plattform und einem beziehungsweise mehreren austauschbaren Zubehörmodulen,
Figur 12 eine Montagehalterung beziehungsweise ein Zubehörmodul gemäß Figur 11,
Figur 13 eine Anordnung mit zwei Möbelstücken gemäß Figur 11,
Figur 14 eine Anordnung der Montagehalterungen beziehungsweise Zubehörmodule gemäß Figur 13,
Figur 15 eine Gesamtansicht der Anordnung gemäß Figur 13,
Figur 16 eine sechste Ausführungsform eines Möbelstücks mit einer Plattform und einem austauschbaren Zubehörmodul gemäß einer ersten Ansicht,
Figur 17 das Möbelstück gemäß Figur 16 in einer weiteren Ansicht,
Figur 18 eine siebte Ausführungsform eines Möbelstücks mit einer Plattform und einem austauschbaren Zubehörmodul,
Figur 19 eine Anwendung des Möbelstücks gemäß Figur 18,
Figur 20 eine achte Ausführungsform eines Möbelstücks mit einer Plattform und einem austauschbaren Zubehörmodul,
Figur 21 eine neunte Ausführungsform eines Möbelstücks mit einer Plattform und einem austauschbaren Zubehörmodul,
Figur 22 eine zehnte Ausführungsform eines Möbelstücks mit einer Plattform und einem austauschbaren Zubehörmodul,
Figur 23 eine elfte Ausführungsform eines Möbelstücks mit einer Plattform und einem austauschbaren Zubehörmodul,
Figur 24 eine zwölfte Ausführungsform eines Möbelstücks mit einer Plattform und einem austauschbaren Zubehörmodul,
Figur 25 eine dreizehnte Ausführungsform eines Möbelstücks mit einer Plattform und einem austauschbaren Zubehörmodul gemäß einer ersten Ansicht,
Figur 26 das Möbelstück gemäß Figur 25 in einer weiteren Ansicht,
Figur 27 einen Teil des Möbelstücks gemäß Figuren 25 und 26, sowie
Figur 28 verschiedene Verwendungen diverser Ausführungsformen von Möbelstücken gemäß der Erfindung.

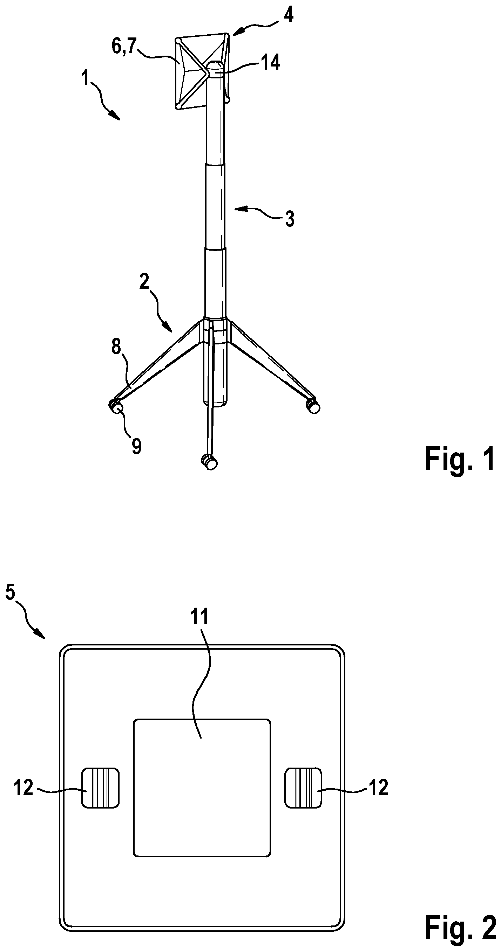

Figur 1 zeigt eine Ausführungsform einer Plattform 1 mit einer Basis 2, einer Säule 3 und einer universellen Montagehalterung 4. Die Basis 2 weist mehrere Füße 8 auf, die als Schenkel von einer Verbindung an der Säule 3 in Richtung einer Standfläche (Aufstellfläche) der Plattform 1 fortweisen und an deren peripheren Enden jeweils eine Rolle 9 zum Verschieben bzw. Verfahren der Plattform 1 auf der Aufstellfläche montiert ist. An dem von einer Verbindung mit der Basis 2 fortweisenden oberen Ende der Säule 3 ist die universelle Montagehalterung 4 über eine Halterung 14 mit der Säule 3 verbunden. In dem Ausführungsbeispiel gemäß Figur 1 ist die universelle Montagehalterung 4 schwenkbar an der Halterung 14 montiert. Die universelle Montagehalterung 4 ist insbesondere in einer horizontalen Achse (das heißt in einer Achse parallel zur Aufstellfläche beziehungsweise senkrecht zur Hauptachsenrichtung der Säule 3) schwenkbar. Zudem kann die universelle Montagehalterung 4 um die Hauptachse der Säule 3 (das heißt um eine Achse senkrecht zur Aufstellfläche) um die Säule 3 schwenkbar sein.

Eine elektrische Funktionalität der Plattform 1 umfasst in dieser Ausführungsform eine elektrische Höhenverstellbarkeit der Säule 3. Die Säule 3 ist teleskopisch höhenverstellbar. Eine Höhenverstellung der Säule 3 erfolgt elektrisch (über einen elektrischen Antrieb, zum Beispiel einem Linearmotor).

In der Ausführungsform gemäß Figur 1 umfasst die Säule 3 drei Rohrsegmente, die ineinander verfahrbar angeordnet sind. Die Säule 3 ist zentral an der Basis 2 festgelegt.

Die universelle Montagehalterung 4 weist eine Montage-Schnittstelle 6 zum mechanischen Montieren und Demontieren eines austauschbaren Zubehörmoduls auf. Ferner weist die universelle Montagehalterung 4 eine Identifikations-Schnittstelle 7 zum Identifizieren eines an der Plattform 1 montierten Zubehörmoduls auf. Die Schnittstellen 6 und 7 sind derart konfiguriert und an der Montagehalterung 4 orientiert beziehungsweise angeordnet, dass durch Montieren eines austauschbaren Zubehörmoduls an der Montagehalterung 4 vermittels der Montage-Schnittstelle 6 automatisch eine Identifikation des Zubehörmoduls über die Identifikations-Schnittstelle 7 erfolgen kann. Auf diese Weise kann ein Zubehörmodul mit einem oder wenigen Handgriffen an der Montagehalterung 4 festgelegt werden, wobei gleichzeitig eine Identifikation des Zubehörmoduls erfolgt (idealerweise ohne dass es hierfür weiterer Handgriffe oder Maßnahmen durch einen Benutzer bedarf).

Die Plattform 1 weist ferner eine Steuereinheit (nicht explizit dargestellt) auf, wobei die Steuereinheit eingerichtet ist mittels der Identifikations-Schnittstelle 7 erfasste Identifikations-Informationen über ein an der Plattform 1 montiertes Zubehörmodul zu erhalten und eine Anpassung der elektrischen Höhenverstellbarkeit der Säule 3, z.B. eine automatische elektrische Höhenanpassung der Säule 3, in Abhängigkeit von den erhaltenen Identifikations-Informationen zu steuern. Z.B. steuert die Steuereinheit den elektrischen Antrieb zur Höhenverstellung der Säule 3 an, um die Säule 3 in Abhängigkeit von erfassten Identifikations-Informationen eines montierten Zubehörmoduls in eine bestimmte Arbeits- oder Betriebshöhe zu fahren. Diese kann z.B. in einem Datenspeicher innerhalb der Plattform 1, z.B. innerhalb der Steuereinheit, hinterlegt bzw. programmiert sein. Alternativ oder ergänzend steuert die Steuereinheit eine Anpassung von Parametern, Betriebsmodi oder Einstellungen der Höhenverstellbarkeit der Säule 3, z.B. das Aufrufen oder Einstellen von gespeicherten maximalen oder minimalen Höhen oder einer vorgegebenen Stop- oder Sicherheitsposition der Säule 3.

Über die Identifikations-Schnittstelle 7 erzeugte bzw. erkannte Identifizierungs- oder Kodiermerkmale eines mit der Plattform 1 gekoppelten Zubehörmoduls können über die Identifikations-Schnittstelle 7 selbst oder über eine nachgeschaltete Verarbeitungseinheit (nicht explizit dargestellt) in elektrische Identifikations-Informationen umgewandelt werden, die der Steuereinheit zur Verfügung gestellt werden. In alternativen Ausführungen und Implementierungen können die Identifizierungs- oder Kodiermerkmale selbst bereits die entsprechenden Identifikations-Informationen darstellen.

Die Plattform 1 ermöglicht somit eine Erkennung eines an der Plattform 1 montierten Zubehörmoduls über die Identifikations-Schnittstelle 7 und eine automatische Anpassung einer Höhenverstellbarkeit, z.B. eine Ansteuerung einer Höhenverstellung, der elektrisch höhenverstellbaren Säule 3 über die Steuereinheit. In der Ausführungsform gemäß Figur 1 können die Identifikations-Schnittstelle 7 und die Steuereinheit in separaten Komponenten eingerichtet und implementiert sein. Alternativ können die Identifikations-Schnittstelle 7 und die Steuereinheit als eine einheitliche Baugruppe mit entsprechender Logik aufgebaut sein.

Die Montage-Schnittstelle 6 kann zum Beispiel durch die äußere Abmessung (Hauptabmessung) der Montagehalterung 4 bestimmt sein. Ergänzend kann die Montagehalterung 4 vorbestimmte Rastmittel (nicht explizit dargestellt) zum Verrasten eines Zubehörmoduls an der Montagehalterung 4 aufweisen. Derartige Rastmittel können zum Beispiel Spanner, Schnellspanner, Riegel, Klemmen, Magnete, Magnethalterungen, oder ähnliches umfassen. Auch Schraubverbindungen sind denkbar.

Die Identifikations-Schnittstelle 7 ist in der Ausführungsform gemäß Figur 1 zum Beispiel als elektrischer Stecker mit elektrischen Kontakten (nicht dargestellt) oder als galvanisch getrennte, drahtlose Schnittstelle realisiert. Letztere kann zum Beispiel induktiv oder kapazitiv arbeiten (z.B. als NFC-Schnittstelle). Z.B. sind eine oder mehrere Induktionsspulen im Rahmen der Anbindungs-Schnittstelle 7 realisiert, die als Teil eines drahtlosen Energie- /Signalübertragungssystems fungieren. Alternativ weist die Identifikations-Schnittstelle 7 z.B. eine Optoelektronik auf zum Auswerten und Erkennen mechanischer Identifizierungs- oder Kodiermerkmale eines an der Plattform 1 montierten Zubehörmoduls und Wandeln dieser Identifizierungs- oder Kodiermerkmale in elektrische Identifikations-Informationen. Auf diese Weise können Identifizierungs- oder Kodiermerkmale eines mit der Plattform 1 gekoppelten Zubehörmoduls zwischen dem Zubehörmodul und der Identifikations-Schnittstelle 7 der Plattform 1 ausgetauscht und von letzterer weiter verarbeitet werden.

In alternativen Ausführungsformen ist die Identifikations-Schnittstelle 7 mechanisch oder elektromechanisch ausgeführt. Die Identifikations-Schnittstelle 7 kann dabei mechanische Identifizierungs- oder Kodiermerkmale (z.B. ein bestimmtes Kupplungsverhalten, eine bestimmte mechanische Steckerkodierung oder einen oder mehrere Stifte oder Pins oder entsprechende Gegenformen) eines an der Plattform 1 montierten Zubehörmoduls rein mechanisch erfassen, wobei z.B. über eine nachgeordnete Verarbeitungseinheit die mechanisch erfassten Identifizierungs- oder Kodiermerkmale in elektrische Identifikations-Informationen gewandelt werden. Alternativ kann die Identifikations-Schnittstelle 7 mechanische Identifizierungs- oder Kodiermerkmale der genannten Art eines an der Plattform 1 montierten Zubehörmoduls elektromechanisch erfassen. Z.B. kann die Identifikations-Schnittstelle 7 selbst mechanisch erfasste Identifizierungs- oder Kodiermerkmale in elektrische Identifikations-Informationen wandeln.

In der Ausführungsform gemäß Figur 1 fungiert die elektrisch ausgeführte Identifikations-Schnittstelle 7 zusätzlich als elektrische Anbindungs-Schnittstelle für eine elektrische Anbindung einer über die Identifikation des austauschbaren Zubehörmoduls hinausgehende Funktionalität, falls das Zubehörmodul eine über die Identifikation hinausgehende elektrische Funktionalität bereitstellt. In alternativen Ausführungsformen ist die elektrische Anbindungs-Schnittstelle der erläuterten Art separat zur Identifikations-Schnittstelle 7 eingerichtet.

Auf diese Weise stellt die Plattform 1 eine multifunktionale Plattform zum Zusammenwirken mit einem austauschbaren Zubehörmodul variabler Funktionalität dar, um ein variabel anpassbares Möbelstück bereitzustellen. Durch Montieren verschiedenster Zubehörmodule an der Montagehalterung 4 können diese auf einfache und flexible Weise mechanisch und ggf. elektrisch mit der Plattform 1 gekoppelt werden. Auf diese Weise sind verschiedene Möbelstücke mit verschiedenen Funktionalitäten bereitstellbar. Aufgrund einer automatischen Erkennung eines mit der Plattform gekoppelten Zubehörmoduls über die Identifikations-Schnittstelle 7 kann eine automatische Anpassung der Höhenverstellbarkeit, z.B. eine Höhenanpassung der Plattform 1 an eine geeignete oder gewünschte Arbeits- oder Betriebshöhe der Plattform 1, erfolgen. Wird beispielsweise ein Zubehörmodul montiert, das eine spezielle Präsentationshöhe für ein Whiteboard, Pinboard, Display, TV, etc. benötigt, so steuert die Steuereinheit automatisch ein Fahren der Säule 3 in die gewünschte Präsentationshöhe. Wird dagegen beispielsweise ein Zubehörmodul montiert, das eine niedrigere Bedien- oder Arbeitshöhe erfordert, wie eine Höhe für eine Tischplatte oder einen Stuhl, so steuert die Steuereinheit automatisch ein Fahren der Säule 3 in diese gewünschte niedrigere Bedien- oder Arbeitshöhe.

Figur 2 zeigt eine Ausführungsform eines Zubehörmoduls 5, das zum Zusammenwirken mit einer Plattform 1 gemäß Figur 1 eingerichtet ist. Figur 2 zeigt eine Draufsicht einer Rückseite des Zubehörmoduls 5. Das Zubehörmodul 5 ist in seinen äußeren Abmessungen im Wesentlichen quadratisch eingerichtet und umfasst an dessen Vorderseite (gegenüberliegend zur dargestellten Rückseite) zum Beispiel eine plane Oberfläche zum Bereitstellen einer Arbeitsfläche. Auf der in Figur 2 dargestellten Rückseite befindet sich zentral angeordnet eine Aufnahme 11, die als Negativform zu den äußeren Hauptabmessungen der Montagehalterung 4 der Plattform 1 gemäß Figur 1 eingerichtet ist. Das Zubehörmodul 5 kann mit dessen Aufnahme 11 auf die Montagehalterung 4 der Plattform 1 gemäß Figur 1 aufgesetzt werden und kann passgenau an der Montagehalterung 4 verrastet werden. Das Zubehörmodul 5 kann zum mechanischen Festlegen an der Montagehalterung 4 entsprechende Gegenrastmittel aufweisen, die komplementär zu entsprechenden Rastmitteln der Montagehalterung 4 der erläuterten Art ausgebildet sind. Figur 2 zeigt insbesondere zwei Fixiervorrichtungen 12, die zum Beispiel Teil eines mechanischen Verriegelungssystems zwischen dem Zubehörmodul 5 und der Montagehalterung 4 darstellen. Die Fixiervorrichtungen 12 können zum Beispiel zwei über Bowdenzüge bedienbare Riegel (nicht dargestellt) betätigen, wodurch das Zubehörmodul 5 an der Montagehalterung 4 verriegelbar ist.

Das Zubehörmodul 5 umfasst in dieser Ausführungsform eine elektrische Funktionalität, zumindest für eine elektrische Identifikation des Zubehörmoduls 5. Das Zubehörmodul 5 weist hierzu eine elektrische Schnittstelle auf, die komplementär zur elektrischen Identifikations-Schnittstelle 7 der Montagehalterung 4 in der Ausführungsform gemäß Figur 1 eingerichtet ist. Das Zubehörmodul 5 kann über seine elektrische Schnittstelle elektrische Identifizierungs- oder Kodiermerkmale bereitstellen. Durch Montieren des Zubehörmoduls 5 an der Montagehalterung 4 erfolgt automatisch eine elektrische Erkennung bzw. Identifikation des Zubehörmoduls 5 über die Identifikations-Schnittstelle 7 der Plattform 1 anhand der bereitgestellten und erfassten Identifizierungs- oder Kodiermerkmale des Zubehörmoduls 5.

Auf diese Weise ist das Zubehörmodul 5 gemäß Figur 2 auf einfache Art und Weise mechanisch an die Plattform 1 anbindbar und wird automatisch über die Identifikations-Schnittstelle 7 der Plattform 1 erkannt.

In alternativen Ausführungsformen muss das Zubehörmodul 5 nicht zwangsläufig eine elektrische Funktionalität bereitstellen. Das Zubehörmodul 5 kann eine rein mechanische Funktionalität aufweisen. In diesem Fall erfolgt eine rein mechanische Kopplung des Zubehörmoduls 5 an der Montagehalterung 4 der Plattform 1 gemäß Figur 1. Eine Identifikation des Zubehörmoduls 5 kann in diesem Fall durch eine entsprechend den obigen Erläuterungen zu Figur 1 angepasste Identifikations-Schnittstelle 7 der Plattform 1 erfolgen, die mechanische Identifizierungs- oder Kodiermerkmale des Zubehörmoduls 5 erfasst und ggf. in elektrische Identifikations-Informationen zur weiteren Verarbeitung umwandelt.

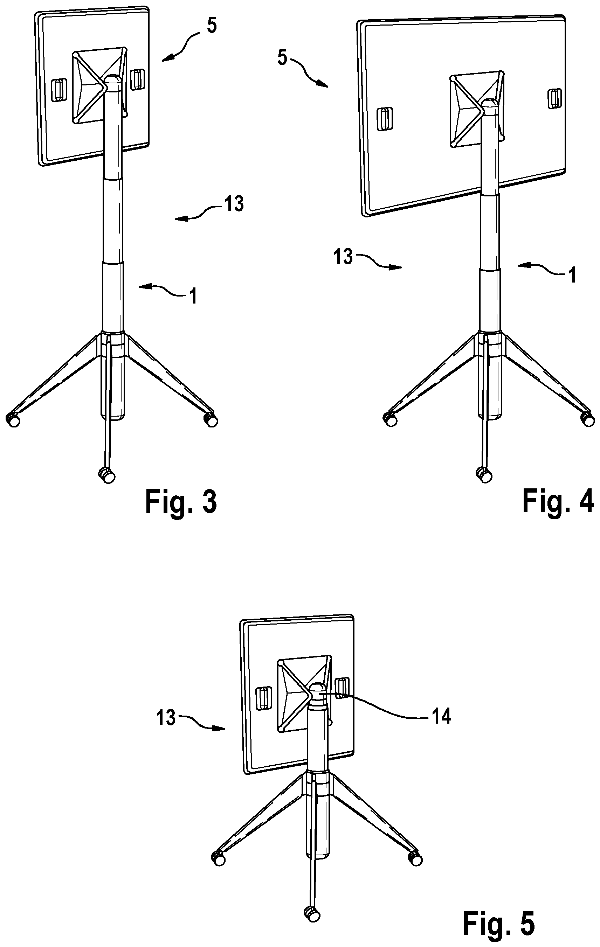

Figur 3 zeigt eine erste Ausführungsform eines variabel anpassbaren Möbelstücks 13, umfassend eine Plattform 1 gemäß Figur 1 und ein daran montiertes Zubehörmodul 5 gemäß Figur 2. Das Zubehörmodul 5 stellt eine bestimmte Funktionalität des Möbelstücks 13 bereit. Zum Bespiel kann das Zubehörmodul 5 an dessen Vorderseite (in Figur 3 nicht dargestellt) eine Arbeitsfläche aufweisen, sodass das Möbelstück 13 in der Ausführungsform gemäß Figur 3 als Pult, Fotowand, Arbeitstisch oder Beistelltisch verwendet werden kann. Hierzu kann die Montagehalterung 4 (vergleiche Figur 1 und obige Erläuterungen) relativ zur Säule 3 verschwenkt werden, sodass das Zubehörmodul 5 in vorbestimmten Freiheitsgraden relativ zur Säule 3 verschwenkbar ist. In der in Figur 3 dargestellten Situation kann das Zubehörmodul 5 zum Beispiel als senkrechtes Pinboard, Whiteboard, Fotowand, und so weiter eingesetzt werden. In zu Figur 3 alternativen Positionen könnte das Zubehörmodul 5 in einem schrägen (zwischen 0° und 90°) Winkel bezüglich der Säule 3 geschwenkt werden, sodass das Zubehörmodul 5 als Pult fungiert. In einer weiter zu

Figur 3 alternativen Position könnte das Zubehörmodul 5 auch in eine horizontale Position bezüglich der Säule 3 geschwenkt werden, sodass das Möbelstück 13 als Arbeitstisch oder Beistelltisch fungiert. Aufgrund einer Höhenverstellbarkeit der Säule 3 (siehe Figur 1 und obige Erläuterungen) ist das Möbelstück 13 in seiner Höhe flexibel an verschiedene Anwendungsfälle anpassbar. Eine Anpassung der Höhenverstellbarkeit der Säule 3, z.B. eine automatische Höhenanpassung, erfolgt (bzw. kann erfolgen) über die automatische Erkennung und Identifizierung des Zubehörmoduls 5 über die Identifikations-Schnittstelle 7 der Plattform 1, wie oben erläutert. Gewünschte oder erforderliche Höhenpositionen oder Sicherheits- bzw. Stop-Positionen oder ähnliches der Säule 3 können in Abhängigkeit von einer gewünschten Verwendung oder Ausgestaltung des Zubehörmoduls 5 vorgegeben (z.B. gespeichert) sein oder programmiert werden. Die Säule 3 kann insbesondere in eine maximal eingefahrene Position gebracht werden, wobei das Möbelstück 13 kompakt in seiner Höhe aufbaut und zum Beispiel unter einem Arbeitstisch oder Schreibtisch positionierbar ist. In einer maximal ausgefahrenen Position der Säule 3 kann das Möbelstück 13 derart hoch aufbauen, dass ein Benutzer zum Beispiel im Stand damit arbeiten kann. Entsprechende Höhenanpassungen können ebenfalls über eine automatische Identifikation des Zubehörmoduls 5 gesteuert oder vorgegeben werden oder manuell gesteuert durch einen Benutzer erfolgen. Aufgrund der Verfahrbarkeit durch die Rollen 9 (vergleiche Figur 1 und obige Erläuterungen) ist das Möbelstück 13 mobil und flexibel einsetzbar und gut transportierbar.

Figur 4 zeigt eine zweite Ausführungsform eines Möbelstücks 13, wobei ein im Vergleich zu Figur 3 in seinen äußeren Abmessungen größeres Zubehörmodul 5 montiert ist. In dieser Ausführungsform kann das Möbelstück 13 zum Beispiel ein Board oder einen Arbeitstisch mit größeren Abmessungen im Vergleich zu Figur 3 bereitstellen. Auch hier können entsprechende Höhenanpassungen je nach Einsatz- und Verwendungszweck über eine automatische Identifikation des Zubehörmoduls 5 gesteuert oder vorgegeben werden oder manuell gesteuert durch einen Benutzer erfolgen.

Figur 5 zeigt die Ausführungsform des Möbelstücks 13 gemäß Figur 3, wobei die Halterung 14 (vergleiche auch Figur 1) näher spezifiziert wird. Die Halterung 14 dient in der Ausführungsform gemäß Figur 5 neben einem Halten der Montagehalterung 4 auch für eine elektrische Energieversorgung der Plattform 1. Hierzu kann die Halterung 14 elektrische Schalt- beziehungsweise Steuermittel für eine Energieversorgung der Plattform 1 aufweisen. Ergänzend kann die Halterung 14 auch einen Akku zur elektrischen Energieversorgung des Möbelstücks 13 aufweisen. In alternativen Ausführungsformen kann der Akku auch an anderer Stelle an der Plattform, insbesondere an oder in der Säule 3 (vergleiche Figur 1) angeordnet sein.

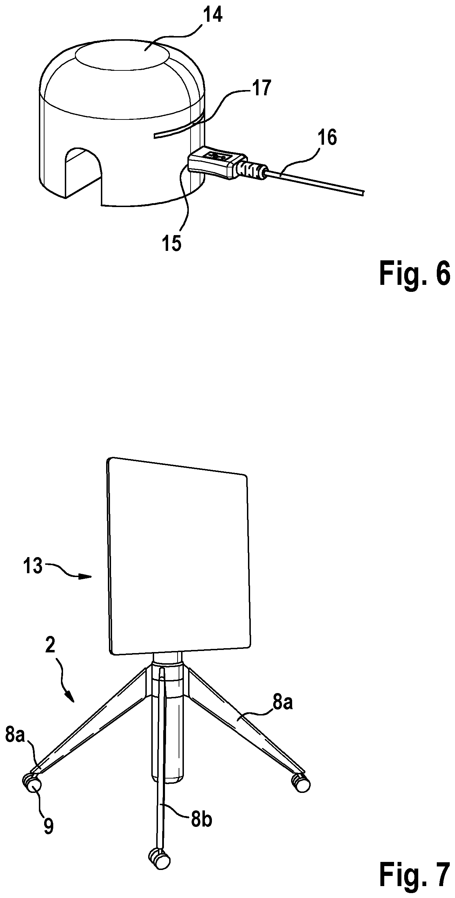

Figur 6 zeigt eine Detailansicht der Halterung 14, wobei eine elektrische Anzeige 17 und ein Anschluss 15 an der Halterung 14 eingerichtet sind. Die elektrische Anzeige 17 dient als Statusanzeige für eine elektrische Energieversorgung des Möbelstücks 13 und/oder allgemein als Statusanzeige des Möbelstücks 13. Zum Beispiel kann das Möbelstück 13 eine drahtlose Kommunikationseinrichtung aufweisen, deren Status über die Anzeige 17 angezeigt werden kann.

Am Anschluss 15 kann, wie in Figur 6 gezeigt, ein Anschlusskabel 16 angesteckt werden. Der Anschluss 15 und das Kabel 16 sind zum Beispiel als USB-Schnittstelle eingerichtet. Über diese Schnittstelle kann der Halterung 14 von außen Energie zugeführt werden, zum Beispiel über ein Netzteil einer externen Energieversorgung. Auf diese Weise kann dem Möbelstück 13 Energie zugeführt werden, um den Akku aufzuladen.

Alternativ oder ergänzend zu einer derartigen Auflademöglichkeit kann das Möbelstück 13 z.B. auch über eine induktive Ladevorrichtung verfügen, die zum Beispiel über Bodenkontakte (Ladematten, Kontakte in der Aufstellfläche, und so weiter) mit Energie drahtlos versorgt werden kann.

Auf diese Weise wird die Mobilität des Möbelstücks 13 weiter unterstützt, wodurch das Möbelstück 13 mobil elektrisch arbeiten kann, ohne dauerhaft mit einer externen Netzversorgung verbunden sein zu müssen. Die Energieversorgung des Möbelstücks 13 dient insbesondere zur Versorgung eines elektrischen Antriebs für die elektrisch höhenverstellbare Säule 3. Alternativ oder ergänzend dient die elektrische Energieversorgung des Möbelstücks 13 je nach oben im Zusammenhang mit Figur 1 erläuterter Ausführung der Identifikations-Schnittstelle 7 unter Umständen auch zur elektrischen Erfassung bzw. Verarbeitung von Identifizierungs- oder Kodiermerkmalen des Zubehörmoduls 5 oder ggf. für eine Versorgung eines montierten Zubehörmoduls 5 (vergleiche obige Erläuterungen). Zum Beispiel kann eine elektrische Funktionalität des Zubehörmoduls 5 mit Energie aus der Plattform 1 versorgt werden. Zum Beispiel kann das Zubehörmodul 5 eine elektrisch aktive Schnittstelle (mit elektrisch aktiven Komponenten) zu dessen Identifikation im Zusammenspiel mit der Identifikations-Schnittstelle 7 der Plattform 1 aufweisen. Zum Beispiel kann das Zubehörmodul 5 als smartes beziehungsweise intelligentes Zubehörmodul 5 eine elektrische Anzeige oder eine Ladevorrichtung für ein mit dem Zubehörmodul 5 gekoppeltes elektronisches Gerät, wie zum Beispiel ein Smartphone oder ein Tablet-Computer, aufweisen. Die elektrische Energieversorgung hierfür kann unmittelbar über das Möbelstück 13 erfolgen. Dies wird über die Kopplung des Zubehörmoduls 5 mit der Plattform 1 über die elektrische Identifikations-Schnittstelle 7 (vergleiche Figur 1) bereitgestellt, die zugleich auch eine elektrische Anbindungs-Schnittstelle für das Zubehörmodul 5 sein kann, wie oben erläutert.

Figur 7 zeigt die Ausführungsform des Möbelstücks 13 gemäß Figur 3, nun mit einer Vorderseite des entsprechenden Zubehörmoduls 5. Figur 7 zeigt eine erste Konfiguration der Basis 2. Hierbei sind die einzelnen Füße 8a, 8b der Basis 2 relativ zueinander schwenkbar um die Längsachse der Säule 3. Das bedeutet, dass die Füße 8a ein Paar bilden und die Füße 8b (ein zweiter Fuß 8b ist durch die Säule in Figur 7 verdeckt) ein zweites Paar bilden. Die beiden Fuß-Paare 8a, 8b können relativ zueinander geschwenkt werden. In der Konstellation gemäß Figur 7 sind die Füße 8a, 8b in einem maximal möglichen Winkel (z.B. ca. 90°) zueinander aufgestellt. Diese Aufstellung dient für eine maximale Stabilität des Möbelstücks 13. Insbesondere bei einer hohen Gewichtsbelastung des Möbelstücks 13 ist dies sinnvoll.

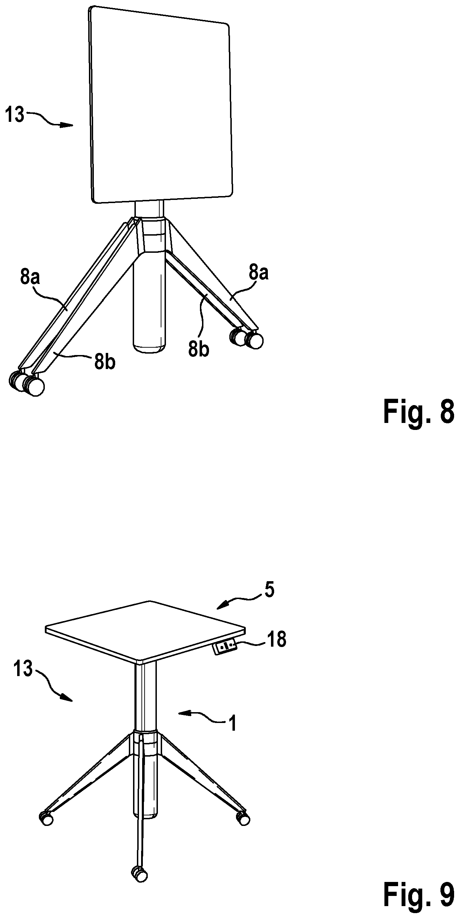

Figur 8 zeigt eine zweite Konfiguration der Basis 2, wobei die Paare der Füße 8a, 8b im Gegensatz zu Figur 7 derart verschwenkt sind, dass jeweils ein Fuß 8a nahe (z.B. in einem Winkel < 15°) zu einem Fuß 8b positioniert ist. Nachdem die Füße 8a, 8b als Schenkel mit gleicher Schenkellänge ausgeführt sind, sind die Rollen 9 der Füße 8a, 8b auf einem gleichen Radius bezüglich der Säule 3 als Zentrum der Basis 2 angeordnet. Das bedeutet, dass die Füße 8a, 8b an der Aufstellfläche nebeneinander angeordnet sind. In der Konstellation gemäß Figur 8 ist somit ebenfalls noch ein Stand des Möbelstücks 13 gewährleistet. Das bedeutet, dass das Möbelstück 13 noch selbständig steht. Allerdings sind die Füße 8a, 8b im Vergleich zu Figur 7 derart nahe zueinander angeordnet, dass das Möbelstück 13 sehr kompakt aufgestellt werden kann. Zum Beispiel kann das Möbelstück 13 in einer Nische hinter einem Schrank oder in einem Flur oder einer Kammer, und so weiter aufgestellt werden. Es ist auch denkbar, dass eine Konstellation gemäß Figur 8 für einen Anwendungsfall gewählt wird, in dem ein Benutzer durch die Füße 8a, 8b nicht behindert werden möchte. Dies ist zum Beispiel bei einer Präsentation des Benutzers unter Verwendung des Möbelstücks 13 als Präsentationsfläche erwünscht. Durch Wechseln zwischen den Konstellationen gemäß Figur 7 und Figur 8, wobei natürlich Zwischenpositionen der Füße 8a, 8b denkbar sind, kann der Benutzer zwischen einer maximal stabilen Aufstellung des Möbelstücks 13 gemäß Figur 7 und einer maximal platzsparenden Aufstellung des Möbelstücks 13 gemäß Figur 8 wechseln.

Figur 9 zeigt eine dritte Ausführungsform eines Möbelstücks mit einer Plattform 1 und einem Zubehörmodul 5. Die Plattform 1 kann z.B. wie in Figur 1 aufgebaut sein. In der Ausführungsform gemäß Figur 9 weist das Zubehörmodul 5 ein Bedien-/Steuerelement 18 auf. Das Bedien-/Steuerelement 18 dient zum Beispiel für eine manuelle Höhenverstellung der Säule 3 des Möbelstücks 13. Das Element 18 kann zum Beispiel als Drucktaster zum Verfahren der Säule 3 nach oben und nach unten eingerichtet sein. Eine elektrische Steuerung der Höhenverstellung kann über eine elektrische Verbindung zwischen dem Element 18 des Zubehörmoduls 5, der elektrischen Identifikations- bzw. Anbindungs-Schnittstelle 7 der Montagehalterung 4 (vergleiche Erläuterungen zu Figur 1) und einem elektrischen Antrieb der Säule 3 erfolgen. Eine entsprechende Steuereinheit (Steuerelektronik) hierfür kann wahlweise entweder im Zubehörmodul 5 und/oder in der Plattform 1 eingerichtet sein. Hier sind verschiedene Konfigurationen möglich.

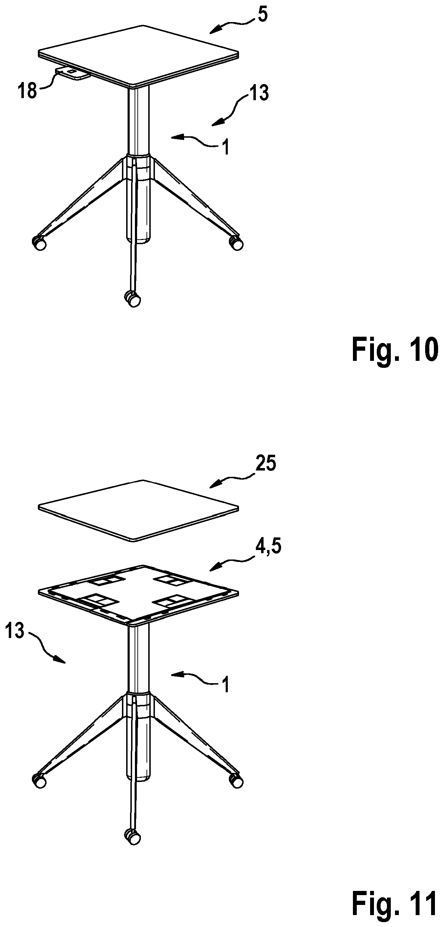

Figur 10 zeigt eine vierte Ausführungsform des Möbelstücks 13, wobei das Zubehörmodul 5 ebenfalls ein Bedien-Steuerelement 18 aufweist, das jedoch im Vergleich zur Figur 9 anders konfiguriert ist. In Figur 10 ist das Element 18 zum Beispiel ein erweitertes Steuerelement, das neben einer reinen Steuerung einer elektrischen Höhenverstellung der Säule 3 zum Beispiel auch eine Anzeige für die Höhenverstellung aufweist. Das Steuerelement 18 kann daneben zum Beispiel eine Memoryfunktion aufweisen, um eine bestimmte Arbeitshöhe des Möbelstücks 13 für eine Anwahl abzuspeichern. Das Element 18 kann auch eine Sicherung zum Sperren beziehungsweise Freigeben der elektrischen Höhenverstellung der Säule 3 aufweisen. Diese wird dann z.B. über eine Benutzer-Karte (Smartcard) aktiviert oder freigegeben. Das Steuerelement 18 gemäß Figur 10 kann zum Beispiel auch eine Sende-/Empfangseinheit für eine externe Fernbedienung oder für eine Kommunikation mit einem Smartphone oder einem Tablet-Gerät aufweisen. Zum Beispiel kann über eine Fernbedienung oder über eine Software-Applikation drahtlos eine Bedienung/Steuerung des Elementes 18 vorgenommen werden.

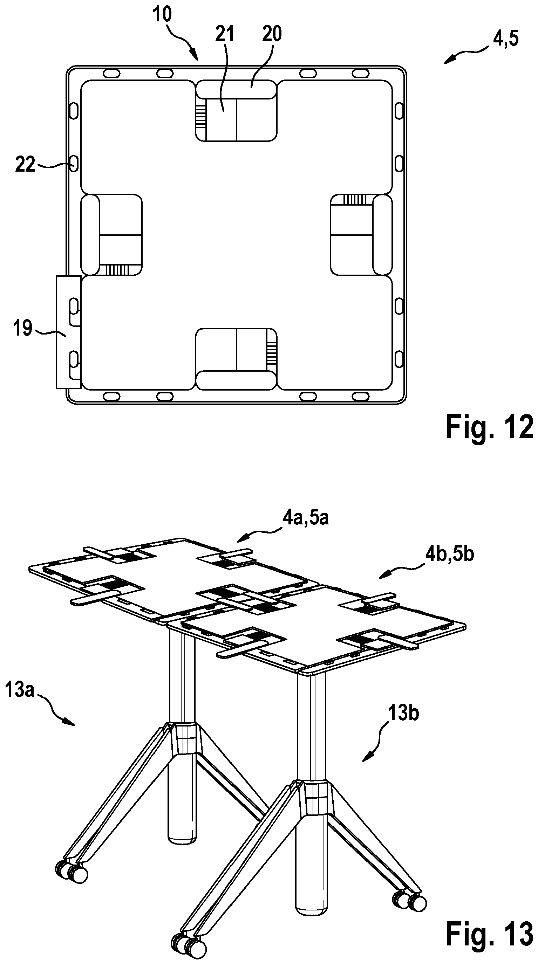

Figur 11 zeigt eine fünfte Ausführungsform eines Möbelstücks 13 mit einer Plattform 1 und einem speziell eingerichteten Zubehörmodul 5 beziehungsweise einer speziell eingerichteten Montagehalterung 4. Die Montagehalterung 4 beziehungsweise das Zubehörmodul 5 gemäß Figur 11 weisen eine spezielle Kopplungs-Schnittstelle auf, die in Figur 12 näher erläutert wird. Gemäß Figur 11 kann auf die Montagehalterung 4 beziehungsweise auf das Zubehörmodul 5 ein weiteres Modul 25 als Deckplatte aufgesetzt werden. In Ausführungsformen gemäß Figur 11, bei denen die Montagehalterung 4 entsprechend eingerichtet ist, fungiert die Deckplatte 25 als Zubehörmodul, das mechanisch mit der Montagehalterung 4 gemäß den obigen Erläuterungen gekoppelt werden kann. In Ausführungsformen gemäß Figur 11, in denen das Zubehörmodul 5 entsprechend konfiguriert ist, ist dieses selbst mechanisch mit einer Montagehalterung 4 (zum Beispiel gemäß Figur 1) gekoppelt, wobei das Zubehörmodul 5 seinerseits mit der Deckplatte 25 mechanisch gekoppelt wird.

Figur 12 zeigt die Montagehalterung 4 beziehungsweise das Zubehörmodul 5 gemäß Figur 11 in einer Draufsicht. Die Komponente 4, 5 weist hierbei insgesamt vier Kopplungs-Schnittstellen 10 auf, die an den vier Außenkanten eingerichtet sind. Die Kopplungs-Schnittstellen 10 weisen jeweils einen mechanischen Schieber 20 und einen elektrischen Kontaktstecker 21 auf. Über den Schieber 20 können die Kontaktstecker 21 jeweils von einer in Figur 12 dargestellten eingefahrenen Position in eine äußere Kopplungsposition geschwenkt werden. In letzterer können die Kontaktstecker 21 der Komponente 4, 5 mit einem weiteren Kontaktstecker 21 einer weiteren Komponente 4, 5 elektrisch und/oder mechanisch gekoppelt werden. Auf diese Weise können mehrere Komponenten 4, 5 mehrerer Möbelstücke 13 mechanisch und/oder elektrisch gekoppelt werden.

Zusätzlich weist die Komponente 4, 5 gemäß Figur 12 eine Halterung 19 auf (vergleiche linke untere Ecke), die an Rastzapfen 22 der Komponente 4, 5 festgelegt ist. Die Halterung 19 dient als Adapterstück zum Kombinieren der Komponente 4, 5 mit weiteren mechanischen Komponenten, die zum Beispiel eine Halterung für ein Buch, Tablet-Gerät oder Smartphone oder weitere an der Komponente 4, 5 montierbare Gegenstände wie Lautsprecher, Mikrofone, Beleuchtungskörper, Displays, Kameras, Getränkehalter, Stifteköcher, Schalen, Computerperipheriegeräte, Tastaturauflagen und so weiter sein können. Hier ist eine Vielzahl von Konfigurationsmöglichkeiten für das Möbelstück 13 bereitgestellt. Gemäß Figur 11 wird die Halterung 19 unter anderem durch die Deckplatte 25, die auf die Komponente 4, 5 aufgesetzt ist, entsprechend gehalten, sodass weitere Komponenten stabil an der Halterung 19 seitlich an der Komponente 4, 5 festgelegt werden können. Es ist möglich, mehrere Halterungen 19 entlang des äußeren Umfangs der Komponente 4, 5 an entsprechenden Zapfen 22 zu montieren.

Figur 13 zeigt eine Anordnung mit zwei Möbelstücken 13a, 13b, die jeweils gemäß Figur 11 eingerichtet sind. In Figur 13 wurden die jeweiligen Deckplatten 25 der Einfachheit halber weggelassen. Figur 13 veranschaulicht eine mechanische und/oder elektrische Kopplung zweier Komponenten 4a, 5a und 4b, 5b der jeweiligen Möbelstücke 13a, 13b.

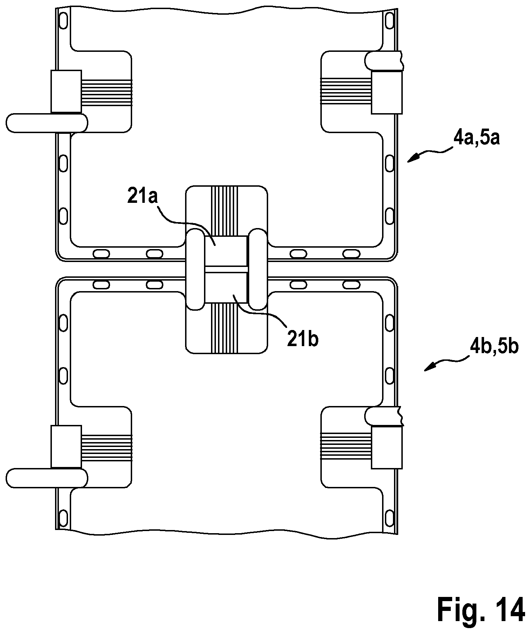

Figur 14 zeigt einen Ausschnitt einer Draufsicht auf die gekoppelten Komponenten 4a, 5a und 4b, 5b. Dabei sind zwei Kontaktstecker 21a und 21b entsprechend über Schieber 20 (vergleiche Figur 12) nach außen geklappt und elektrisch konnektiert. Auf diese Weise erfolgt eine elektrische Kommunikation beziehungsweise Synchronisation zwischen den Komponenten 4a, 5a und 4b, 5b. Eine Anwendung der Konstellationen gemäß Figur 13 und Figur 14 kann zum Beispiel darin bestehen, zwei Möbelstücke 13a und 13b zu einem Gesamtmöbelstück zu kombinieren, wodurch zum Beispiel ein Arbeitstisch mit zwei Säulen realisierbar ist. Im Falle einer elektrischen Höhenverstellbarkeit der jeweiligen Säulen kann zum Beispiel eine elektrische Synchronisation einer Höhenverstellung vermittels der gekoppelten Komponenten 4a, 5a, 4b, 5b zum synchronen Verstellen der Höhe des kombinierten Gesamtmöbelstücks erfolgen. Alternativ oder ergänzend können die Komponenten 4a, 5a und 4b, 5b auch weitere Signale miteinander austauschen und entsprechend kommunizieren.

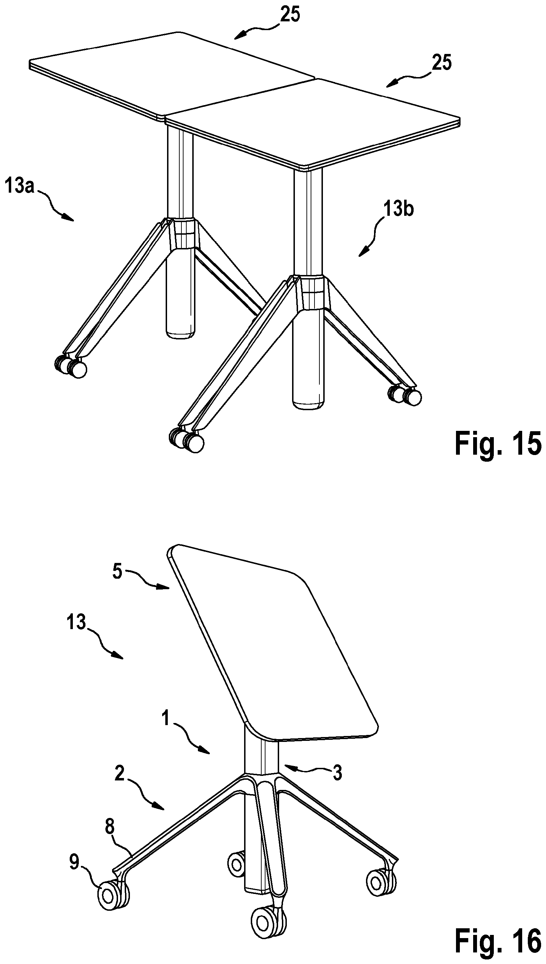

Figur 15 zeigt schließlich die Anordnung gemäß Figur 13 mit nun auf der Oberfläche der Komponenten 4a, 5a und 4b, 5b montierten Deckplatten 25. Auf diese Weise ist ein stabiler, breiter Arbeitstisch mit zwei Säulen realisiert, die über die jeweiligen Möbelstücke 13a und 13b in kombinierter Form bereitgestellt werden.

Figur 16 zeigt eine sechste Ausführungsform eines Möbelstücks 13 mit einer Plattform 1 und einem daran montierten Zubehörmodul 5. Analog zu Figur 1 weist die Plattform 1 eine Basis 2 und eine Säule 3 auf. Die Säule 3 ist ebenfalls höhenverstellbar. Im Unterschied zu der Ausführungsform der Plattform 1 gemäß Figur 1 weist die Basis 2 mehrere Füße 8 auf, die jedoch fest zueinander eingerichtet sind. Insofern bildet die Basis 2 in der Ausführungsform gemäß Figur 16 ein festes Fußkreuz der Füße 8. In dieser Ausführungsform sind die Füße 8 zueinander nicht verschwenkbar. An den Füßen 8 sind Rollen 9 montiert.

Das Zubehörmodul 5 gemäß der Ausführungsform in Figur 16 kann ebenfalls verschwenkbar über eine entsprechende Montagehalterung 4 eingerichtet sein. Eine Anbindung/Erkennung des Zubehörmoduls 5 erfolgt in analoger Weise zur oben erläuterten Art und bedarf an dieser Stelle keiner weiteren Erläuterung.

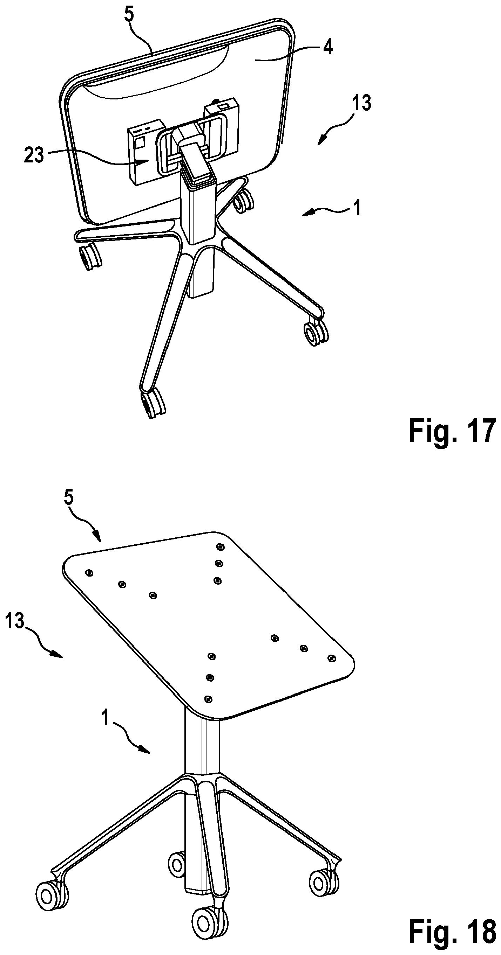

Figur 17 zeigt eine weitere Darstellung der Ausführungsform aus Figur 16. In Figur 17 ist eine Rückseite der Montagehalterung 4 beziehungsweise des Zubehörmoduls 5 gezeigt. Die Montagehalterung 4 weist in dieser Ausführungsform eine Elektronik 23 auf, die in der Nähe des Zentrums der Montagehalterung 4 montiert ist. Die Elektronik 23 kann zum Beispiel eine Steuereinheit (Steuerelektronik) der oben erläuterten Art für eine automatische und/oder manuelle Anpassung der elektrischen Höhenverstellbarkeit der Säule 3 umfassen. Alternativ oder ergänzend kann die Elektronik 23 eine drahtlose Kommunikationsschnittstelle, eine elektrische Energieversorgung (z.B. per Akku), und so weiter zur Kommunikation mit externen Geräten (z.B. Smartphones), zur Versorgung der Plattform 1 und/oder zum Anbinden einer elektrischen Funktionalität (falls gegeben) des Zubehörmoduls 5 umfassen. Hier sind verschiedene Konfigurationen möglich.

Figur 18 zeigt eine siebte Ausführungsform eines Möbelstücks 13 mit einer Plattform 1 und einem daran montierten Zubehörmodul 5. In dieser Ausführungsform ist das Zubehörmodul 5 ein VESA-Adapter zur Montage eines elektronischen Gerätes.

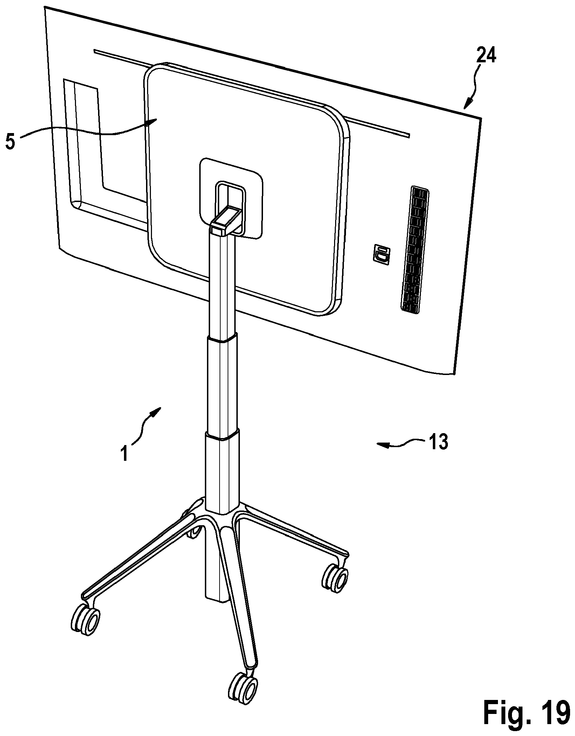

Figur 19 zeigt einen Anwendungsfall des Möbelstücks 13 gemäß Figur 18. Hierbei ist an dem Zubehörmodul 5 ein TV-Gerät 24 oder ein ähnliches Display montiert. Das Möbelstück 13 ist mit der Plattform 1 in einer Arbeitshöhe befindlich, mit der ein Benutzer mit dem TV-Gerät 24 arbeitet. Eine Kopplung des Zubehörmoduls 5 an der Plattform 1 erfolgt analog zu den obigen Erläuterungen. Aufgrund einer automatischen Erkennung und Identifizierung des Zubehörmoduls 5 wurde die Säule 3 von der Steuereinheit der Plattform 1 in die in Figur 19 dargestellte Arbeitshöhe gefahren (z.B. aus der in Figur 18 dargestellten Montagehöhe). Die dargestellte Montagehöhe kann über die Steuereinheit vorgegeben werden, wobei ein Verfahren der Säule 3 über einen Benutzer manuell gesteuert wird. Alternativ wird die Säule 3 automatisch gesteuert über die Steuereinheit in die dargestellte Montagehöhe gebracht.

Es ist zum Beispiel denkbar, dass ein Benutzer verschiedene Zubehörmodule 5 gemäß den Figuren 16 bis 19 für verschiedene Anwendungsfälle besitzt und diese jeweils mit einer Plattform 1 als variabel anpassbares Möbelstück 13 kombiniert. So kann ein Benutzer zum Beispiel zwischen dem Möbelstück 13 als Beistelltisch, Pult oder Arbeitstisch gemäß den Figuren 16 und 17 und zwischen einem VESA-Adapter zum Aufstellen eines Displays 24 gemäß den Figuren 18 und 19 wechseln. Die Plattform 1 ist dabei derart multifunktional ausgeführt, dass eine entsprechende Funktionalität der jeweiligen Zubehörmodule 5 auf einfache Weise realisierbar ist. Verschiedene Bedien- und Arbeitshöhen der Säule 3, die vorgegeben bzw. programmiert sein können, werden durch die Steuereinheit entsprechend angepasst oder aktiv angesteuert. Dies erfolgt, wie oben erläutert, in Zusammenspiel mit Identifikations-Informationen über das jeweilige Zubehörmodul 5, die mittels der Identifikations-Schnittstelle 7 erfasst und von der Steuereinheit zur Ansteuerung einer Höhenverstellung der Säule 3 verarbeitet werden.

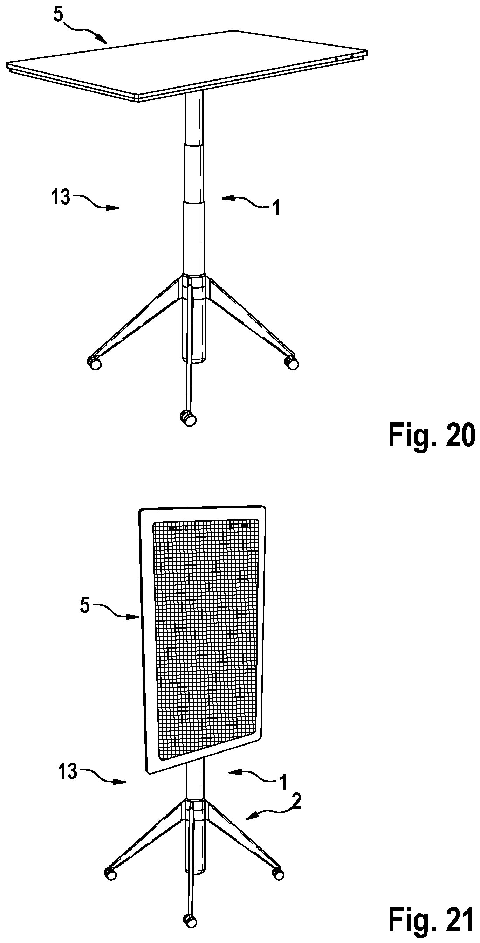

Figur 20 zeigt eine achte Ausführungsform eines Möbelstücks 13 mit einer Plattform 1 und einem daran montierten Zubehörmodul 5, das in Figur 20 als größere Arbeitsplatte eingerichtet ist. In der Ausführungsform gemäß Figur 20 kann die Montagehalterung 4 (nicht dargestellt) in einer horizontalen Position ihrer äußeren Hauptabmessungen fest an der Säule 3 (vergleiche Figur 1) montiert sein. In diesem Fall ist das Zubehörmodul 5 gemäß Figur 20 in einer festen (nicht schwenkbaren) Position angeordnet. Dies ist zum Beispiel denkbar in Anwendungsfällen, in denen lediglich eine horizontale plane Oberfläche des Zubehörmoduls 5 verwendet werden soll. Dennoch kann das Möbelstück 13 an der Säule 3 in seiner Höhe eingestellt werden. Darüber hinaus kann die Plattform 1 z.B. wie zu Figur 1 erläutert eingerichtet sein.

Auch in dieser Ausführungsform können verschiedene Bedien- und Arbeitshöhen der Säule 3 durch die Steuereinheit in Zusammenspiel mit der Identifikations-Schnittstelle 7 vorgegeben, angepasst oder aktiv angefahren werden.

Figur 21 zeigt eine neunte Ausführungsform eines Möbelstücks 13 mit einer Plattform 1 und einem daran montierten Zubehörmodul 5. Im Unterschied zu Figur 20 ist das Zubehörmodul 5 in einer senkrechten Orientierung entlang der Säule 3 (vergleiche Figur 1) angeordnet. Hierbei ist ebenfalls denkbar, dass eine Montagehalterung 4 fest an der Säule montiert ist, sodass die in Figur 21 dargestellte Position des Zubehörmoduls 5 fest (nicht schwenkbar) vorgegeben ist. Derartige Anwendungsfälle sind zum Beispiel sinnvoll für eine Funktionalität des Möbelstücks 13 als Pinboard oder Whiteboard oder sonstige Präsentationsfläche. Darüber hinaus kann die Plattform 1 z.B. wie zu Figur 1 erläutert eingerichtet sein. Auch in dieser Ausführungsform können verschiedene Bedien- und Arbeitshöhen der Säule 3 durch die Steuereinheit in Zusammenspiel mit der Identifikations-Schnittstelle 7 vorgegeben, angepasst oder aktiv angefahren werden. Eine derartige automatische Höheneinstellung bzw. Vorgabe einer Höhe der Säule 3 durch die Steuereinheit hat speziell in dieser Anwendung den Vorteil, dass ein Anschlagen des Zubehörmoduls an der Basis 2 der Plattform 1 verhindert werden kann. Eine entsprechende Mindesthöhe der Säule 3 (ggf. in Abhängigkeit von den Abmessungen des Zubehörmoduls 5) zur sicheren Verwendung des Zubehörmoduls 5 kann z.B. in der oder durch die Steuereinheit vorgegeben sein oder in einem Datenspeicher der Plattform 1 hinterlegt sein und durch die Steuereinheit verarbeitet werden.

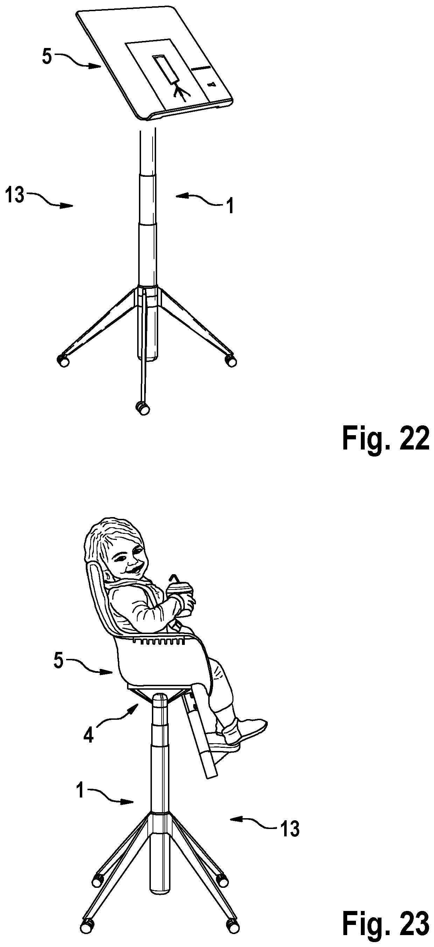

Figur 22 zeigt eine zehnte Ausführungsform eines Möbelstücks 13 mit einer Plattform 1 und einem daran montierten Zubehörmodul 5. In dieser Ausführungsform kann das Zubehörmodul 5 insbesondere eine elektronische Funktionalität bereitstellen. Zum Beispiel kann das Zubehörmodul 5 ein Display, insbesondere ein Touch-Display sein. Eine elektrische Anbindung des Zubehörmoduls 5 erfolgt über eine Identifikations-/Anbindungs-Schnittstelle 7 (vergleiche obige Erläuterungen). Eine Anwendung der Konstellation in Figur 22 ist zum Beispiel denkbar für einen Grafikdesigner, der wahlweise im Stehen oder sitzend arbeiten möchte. Eine Höhenverstellung des Möbelstücks 13 kann manuell oder automatisiert über die Steuereinheit anhand der höhenverstellbaren Säule 3 erfolgen. Die Plattform 1 kann z.B. wie zu Figur 1 erläutert eingerichtet sein.

Figur 23 zeigt eine elfte Ausführungsform eines Möbelstücks 13 mit einer Plattform 1 und einem daran montierten Zubehörmodul 5, das über die Montagehalterung 4 an der Plattform 1 festgelegt ist. In der Ausführungsform gemäß Figur 23 ist das Zubehörmodul 5 als Kindersitz eingerichtet. Auch hier kann eine entsprechende Höhenverstellung der Plattform 1 über die Säule 3 (siehe Figur 1) manuell oder automatisiert über die Steuereinheit erfolgen. Die Plattform 1 kann z.B. wie zu Figur 1 erläutert eingerichtet sein.

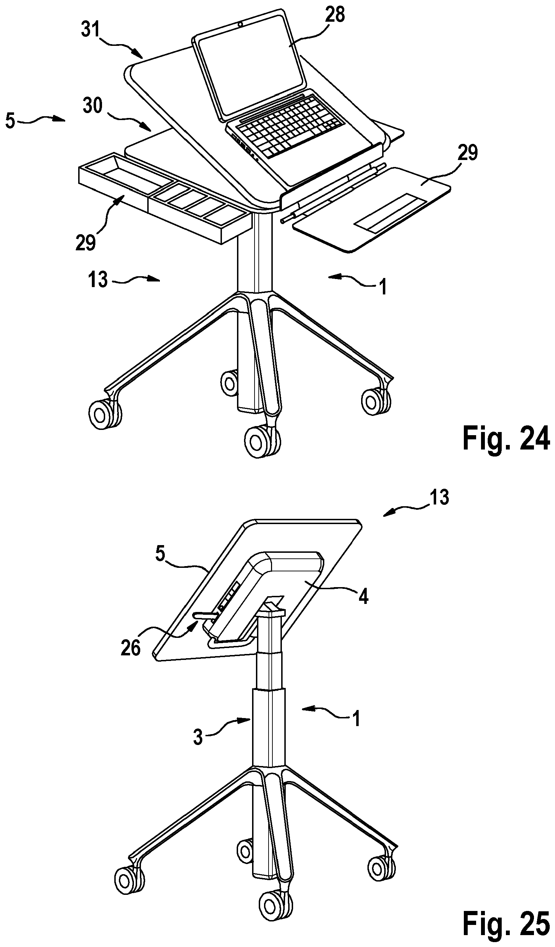

Figur 24 zeigt eine zwölfte Ausführungsform eines Möbelstücks 13 mit einer Plattform 1 und einem daran montierten austauschbaren Zubehörmodul 5. In der Ausführungsform gemäß Figur 24 ist das Zubehörmodul 5 als komplexere Arbeitstisch/Sekretär-Plattform ausgebildet. Das Zubehörmodul 5 weist hierzu eine waagerecht angeordnete Basisplatte 30 auf, die an der Montagehalterung (nicht dargestellt) der Plattform 1 montiert ist. An der Basisplatte 30 ist wiederum schwenkbar eine Arbeitsplatte 31 angeordnet, die in einem oder mehreren spitzen Winkelstellungen bezüglich der Basisplatte 30 angeordnet werden kann. In der Ausführungsform gemäß Figur 24 dient die Arbeitsplatte 31 als Aufnahme/Abstellfläche für einen mobilen Computer, wie z.B. einen Laptop 28 oder ein Tablet oder dergleichen. An den Seiten der Basisplatte 30 sind diverse Ablagen 29 für Tastatur oder sonstige Peripheriegeräte bzw. für Schreibgeräte, Büromaterial, usw. eingerichtet. Der Vorteil dieser Ausführungsform ist eine vielseitige Arbeitsumgebung, in der eine Vielzahl von Zubehör verwendet und verstaut werden kann, wobei die Arbeitsplatte 31 bzgl. der Basisplatte 30 variabel positionierbar ist (z.B. für eine optimale Bedien- oder Betrachterposition für den Laptop 28) und wobei dennoch alles weitere Zubehör vermittels der Ablagen 29 in einer horizontalen Position verbleiben kann. Die Plattform 1 kann z.B. wie zu Figur 1 erläutert eingerichtet sein.

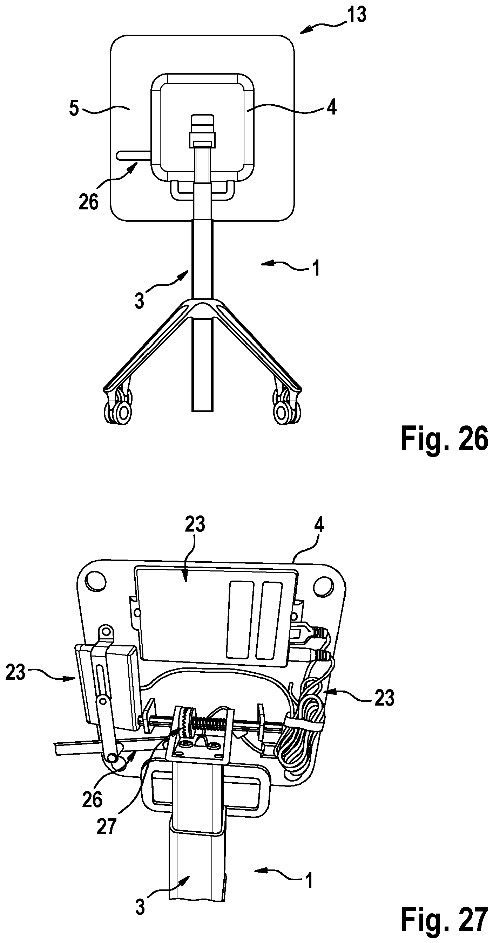

Die Figuren 25 und 26 zeigen eine dreizehnte Ausführungsform eines Möbelstücks 13 mit einer Plattform 1 und einem austauschbaren Zubehörmodul 5 in zwei verschiedenen Ansichten und Stellungen des Zubehörmoduls 5. Das Zubehörmodul 5 ist an der Montagehalterung 4 montiert. Die Montagehalterung 4 ist bezüglich der Säule 3 schwenkbar und in verschiedenen diskreten Rastpositionen verriegelbar. Das Zubehörmodul 5 kann somit in verschiedene Winkelpositionen bzgl. der Säule 3 gebracht werden. Zum Verrasten bzw. Lösen einer stabilen Rastposition ist ein bedienbarer Hebel 26 an der Montagehalterung 4 angeordnet. Über diesen Hebel 26 kann eine Rastvorrichtung 27 (siehe Figur 27) bedient werden. Figur 25 zeigt eine schräge Winkelposition des Zubehörmoduls 5 bzgl. der Säule 3. Figur 26 zeigt eine im Wesentlichen vertikale Winkelposition des Zubehörmoduls 5 bzgl. der Säule 3.

Figur 27 zeigt einen Teil des Möbelstücks 13 gemäß der Ausführungsform der Figuren 25 und 26. Hierbei ist eine Abdeckung der Montagehalterung 4 abgenommen, sodass ein innerer Bereich der Montagehalterung 4 ersichtlich ist. Dieser zeigt die Rastvorrichtung 27, die in dieser Ausführungsform als vorgespannte Zahnrad-Kupplung ausgeführt ist. Über den Hebel 26 kann die vorgespannte Zahnrad-Kupplung außer Eingriff gebracht werden, sodass die Montagehalterung 4 gemeinsam mit dem Zubehörmodul 5 verschwenkt werden kann. Bei nicht betätigtem Hebel 26 ist die Zahnrad-Kupplung in Eingriff und arretiert die Montagehalterung 4 gemeinsam mit dem Zubehörmodul 5 in der gewünschten Position. Neben diesem Mechanismus zeigt Figur 27 auch noch Komponenten einer Elektronik 23, die in diesem Ausführungsbeispiel einen Akku, eine Steuereinheit zum Ansteuern eines Antriebs für die Höhenverstellung der Säule 3 und Verkabelung umfasst. Die Elektronik 23 kann selbstverständlich weitere Komponenten, insbesondere der oben erläuterten Art umfassen. Die Plattform 1 der Ausführungsform der Figuren 25 bis 27 kann z.B. wie zu Figur 1 erläutert eingerichtet sein.

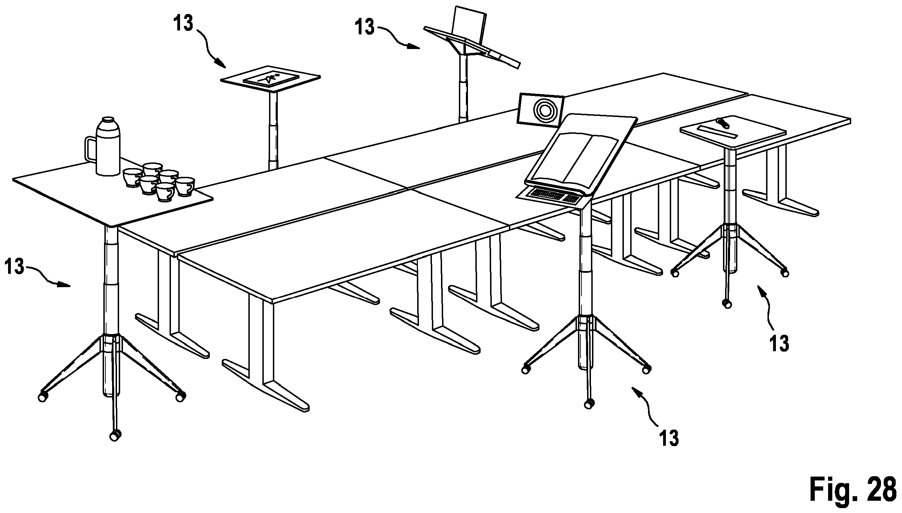

Figur 28 zeigt eine Übersicht über verschiedenste Anwendungsszenarien der hier erläuterten variabel anpassbaren Möbelstücke 13. Die Möbelstücke 13 können zum Beispiel als Beistelltisch, kleiner Arbeitstisch, Stehpult, und so weiter eingesetzt werden. Es ist zum Beispiel denkbar, verschiedenste Zubehörmodule 5 für verschiedene Funktionalitäten vorzuhalten, die mit einer entsprechenden Plattform 1 mechanisch und gegebenenfalls elektrisch kombiniert werden. Es ist zum Beispiel denkbar, ein Set mit einer oder mehreren Plattformen 1 der oben erläuterten Art und einer Vielzahl von austauschbaren Zubehörmodulen 5, 5a, 5b der oben erläuterten Art vorzuhalten, wobei die austauschbaren Zubehörmodule 5, 5a, 5b jeweils vermittels der entsprechenden Montage-Schnittstelle 6 und vermittels der entsprechenden Identifikations-/Anbindungs-Schnittstelle 7 an der universellen Montagehalterung 4, 4a, 4b der wenigstens einen Plattform 1 montierbar und anbindbar sind. Eine automatische Erkennung und Identifizierung der austauschbaren Zubehörmodule 5, 5a, 5b erfolgt über die Identifikations-Schnittstelle 7, wobei über die Steuereinheit der Plattform 1 gewünschte Arbeits- und Betriebshöhen der Säule 3 in Abhängigkeit von dem jeweils identifizierten Zubehörmodul 5, 5a, 5b vorgegeben oder automatisch angesteuert werden.

Das hier erläuterte variabel einsetzbare Möbelstück 13 bietet einem Benutzer Vorteile einer mobilen, variablen, flexiblen und sicheren Anwendung und stellt durch eine universelle Halterung und Erkennung austauschbarer Zubehörmodule eine sehr flexible Anpassbarkeit des Möbelstücks spezifisch für verschiedene Anwendungsfälle und -Situationen bereit.

Die dargestellten Ausführungsformen sind lediglich beispielhaft gewählt.

### Bezugszeichenliste

- 1: Plattform
- 2: Basis
- 3: Säule
- 4, 4a, 4b: universelle Montagehalterung
- 5, 5a, 5b: Zubehörmodul
- 6: Montageschnittstelle
- 7: Identifikations-Schnittstelle
- 8, 8a, 8b: Fuß
- 9: Rolle
- 10: Kopplungsschnittstelle
- 11: Aufnahme für Montagehalterung
- 12: Fixiervorrichtung
- 13, 13a, 13b: Möbelstück
- 14: Halterung
- 15: Anschluss
- 16: Kabel
- 17: Anzeige
- 18: Bedien-/Steuerelement
- 19: Halterung
- 20: Schieber
- 21, 21a, 21b: Kontaktstecker
- 22: Zapfen
- 23: Elektronik
- 24: TV
- 25: Deckplatte
- 26: Hebel
- 27: Rastvorrichtung
- 28: Laptop
- 29: Ablage
- 30: Basisplatte
- 31: Arbeitsplatte

## Patentansprüche

1. Plattform (1) für ein variabel anpassbares Möbelstück (13, 13a, 13b), wobei die Plattform (1) eine Basis (2) zum Aufstellen der Plattform (1) auf einer Aufstellfläche, eine Säule (3) sowie eine universelle Montagehalterung (4, 4a, 4b) zur Montage von austauschbaren Zubehörmodulen (5, 5a, 5b) aufweist,
wobei die Säule (3) mit der Basis (2) verbunden ist und die universelle Montagehalterung (4, 4a, 4b) an einem von der Basis (2) fortweisenden Ende der Säule (3) angeordnet ist, wobei die universelle Montagehalterung (4, 4a, 4b) eine mechanische Montage-Schnittstelle (6) zum Montieren und Demontieren von austauschbaren Zubehörmodulen (5, 5a, 5b) an der Plattform (1) aufweist,
wobei die Plattform (1) eine elektrische Funktionalität aufweist, und
**dadurch gekennzeichnet, dass**
die Plattform (1) eine Identifikations-Schnittstelle (7) zum Identifizieren eines an der Plattform (1) montierten Zubehörmoduls (5, 5a, 5b) und eine Steuereinheit aufweist, wobei die Steuereinheit eingerichtet ist mittels der Identifikations-Schnittstelle (7) erfasste Identifikations-Informationen über ein an der Plattform (1) montiertes Zubehörmodul (5, 5a, 5b) zu erhalten und eine Anpassung der elektrischen Funktionalität der Plattform (1) in Abhängigkeit von den erhaltenen Identifikations-Informationen zu steuern.

2. Plattform (1) nach Anspruch 1, wobei die elektrische Funktionalität der Plattform (1) eine elektrische Höhenverstellbarkeit der Säule (3) umfasst.

3. Plattform (1) nach Anspruch 2, wobei in der Säule (3) ein elektrischer Antrieb zur elektrischen Höhenverstellung der Säule (3) integriert ist.

4. Plattform (1) nach Anspruch 2 oder 3, wobei die Steuereinheit eingerichtet ist, eine automatische Höhenanpassung der Säule (3) in Abhängigkeit von den erhaltenen Identifikations-Informationen zu steuern.

5. Plattform (1) nach einem der Ansprüche 1 bis 4, wobei die universelle Montagehalterung (4, 4a, 4b) eine elektrische Anbindungs-Schnittstelle (7) zum elektrischen Anbinden austauschbarer Zubehörmodule (5, 5a, 5b) an die Plattform (1) aufweist,
wobei die Montage-Schnittstelle (6) und die Anbindungs-Schnittstelle (7) der universellen Montagehalterung (4, 4a, 4b) derart eingerichtet sind, dass durch Montieren eines austauschbaren Zubehörmoduls (5, 5a, 5b) an der Plattform (1) vermittels der Montage-Schnittstelle (6) automatisch eine elektrische Verbindung des austauschbaren Zubehörmoduls (5, 5a, 5b) mit der Anbindungs-Schnittstelle (7) herstellbar ist.

6. Plattform (1) nach einem der Ansprüche 1 bis 5, wobei die Säule (3) bei aufgestellter Plattform (1) senkrecht zur Aufstellfläche angeordnet und teleskopisch höhenverstellbar ist.

7. Plattform (1) nach einem der Ansprüche 1 bis 6, weiter aufweisend einen Akku zur elektrischen Energieversorgung der Plattform (1) und/oder eines an der Plattform (1) montierten austauschbaren Zubehörmoduls (5, 5a, 5b).

8. Plattform (1) nach einem der Ansprüche 1 bis 7, wobei die Basis (2) zumindest drei Füße (8, 8a, 8b) aufweist, wobei an wenigstens zwei Füßen (8, 8a, 8b) jeweils eine Rolle (9) angeordnet ist zum Verschieben der Plattform (1) auf der Aufstellfläche.

9. Plattform (1) nach Anspruch 8, wobei die Füße (8, 8a, 8b) jeweils als von einer Verbindung mit der Säule (3) fortweisende Schenkel mit gleicher Schenkellänge ausgeführt sind,
wobei ein oder mehrere Füße (8, 8a, 8b) relativ zu einem oder mehreren anderen Füßen (8, 8a, 8b) um eine Achse senkrecht zur Aufstellfläche schwenkbar sind.

10. Plattform (1) nach einem der Ansprüche 1 bis 9, wobei die universelle Montagehalterung (4, 4a, 4b)
- schwenkbar an der Säule (3) angeordnet ist oder
- bei aufgestellter Plattform (1) bezüglich der Aufstellfläche horizontal oder vertikal in ihrer Hauptabmessung fest an der Säule (3) angeordnet ist.

11. Plattform (1) nach einem der Ansprüche 1 bis 10, wobei die universelle Montagehalterung (4, 4a, 4b) eine Kopplungs-Schnittstelle (10) zum mechanischen und/oder elektrischen Koppeln mit einer weiteren universellen Montagehalterung (4, 4a, 4b) einer weiteren Plattform (1) aufweist.

12. Variabel anpassbares Möbelstück (13, 13a, 13b) mit einer Plattform (1) nach einem der Ansprüche 1 bis 11 und einem austauschbaren Zubehörmodul (5, 5a, 5b), das vermittels der Montage-Schnittstelle (6) an der universellen Montagehalterung (4, 4a, 4b) der Plattform (1) montiert oder montierbar ist.

13. Variabel anpassbares Möbelstück (13, 13a, 13b) nach Anspruch 12, wobei das austauschbare Zubehörmodul (5, 5a, 5b) wenigstens eine der folgenden Funktionen aufweist:
- Zubehörmodul (5, 5a, 5b) mit einer planen Arbeitsfläche,
- Zubehörmodul (5, 5a, 5b) mit einer Halterung für ein Buch, Tablet-Computer oder Smartphone,
- Zubehörmodul (5, 5a, 5b) mit einem translatorisch und/oder rotatorisch bewegbaren Oberflächenelement,
- Zubehörmodul (5, 5a, 5b) mit einer Halterung gemäß einem Standard der Video Electronics Standards Association (VESA),
- Zubehörmodul (5, 5a, 5b) mit einer mechanischen Halterung (19) für daran montierbare Gegenstände,
- Zubehörmodul (5, 5a, 5b) mit einer elektrischen Zubehör-Schnittstelle zum Anschließen bzw. Koppeln elektrischer Geräte,
- Zubehörmodul (5, 5a, 5b) mit einer Kopplungs-Schnittstelle (10) zum mechanischen und/oder elektrischen Koppeln mit einem weiteren Zubehörmodul (5, 5a, 5b),
- Zubehörmodul (5, 5a, 5b) mit integriertem Whiteboard,
- Zubehörmodul (5, 5a, 5b) mit integriertem Display,
- Zubehörmodul (5, 5a, 5b) mit integriertem, elektrischem Bedien- oder Steuerelement (18),
- Zubehörmodul (5, 5a, 5b), das als Sitz ausgeführt ist.

14. Set umfassend wenigstens ein variabel anpassbares Möbelstück (13, 13a, 13b) nach Anspruch 12 oder 13 und eine Vielzahl weiterer solcher austauschbarer Zubehörmodule (5, 5a, 5b), die jeweils vermittels der Montage-Schnittstelle (6) an der universellen Montagehalterung (4, 4a, 4b) der wenigstens einen Plattform (1) montierbar sind.

15. Verfahren zum Steuern eines variabel anpassbaren Möbelstückes nach Anspruch 12 oder 13 oder gemäß einem Set nach Anspruch 14,
wobei die Identifikations-Schnittstelle (7) der Plattform (1) das an der Plattform (1) montierte Zubehörmodul (5, 5a, 5b) automatisch identifiziert,
wobei die Steuereinheit mittels der Identifikations-Schnittstelle (7) erfasste Identifikations-Informationen über das an der Plattform (1) montierte Zubehörmodul (5, 5a, 5b) erhält und
wobei die Steuereinheit eine Anpassung der elektrischen Funktionalität der Plattform (1) in Abhängigkeit von den erhaltenen Identifikations-Informationen steuert.

## Claims

1. A platform (1) for a variably adaptable piece of furniture (13, 13a, 13b), the platform (1) having a base (2) for placing the platform (1) on an installation surface, a column (3) and a universal mounting bracket (4, 4a, 4b) for mounting interchangeable accessory modules (5, 5a, 5b),
wherein the column (3) is connected to the base (2) and the universal mounting bracket (4, 4a, 4b) is arranged at an end of the column (3) facing away from the base (2),
wherein the universal mounting bracket (4, 4a, 4b) has a mechanical mounting interface (6) for mounting and dismounting interchangeable accessory modules (5, 5a, 5b) to the platform (1),
wherein the platform (1) has electrical functionality, and
**characterized in that**
the platform (1) comprises an identification interface (7) for identifying an accessory module (5, 5a, 5b) mounted on the platform (1) and a control unit, wherein the control unit is adapted to obtain identification information about an accessory module (5, 5a, 5b) mounted on the platform (1), the identification information acquired by means of the identification interface (7), and to control an adaptation of the electrical functionality of the platform (1) depending on the obtained identification information.

2. The platform (1) according to claim 1, wherein the electrical functionality of the platform (1) comprises an electrical height adjustability of the column (3).

3. The platform (1) according to claim 2, wherein an electric drive for electric height adjustment of the column (3) is integrated in the column (3).

4. The platform (1) according to claim 2 or 3, wherein the control unit is configured to control an automatic height adjustment of the column (3) depending on the received identification information.

5. The platform (1) according to any one of claims 1 to 4, wherein the universal mounting bracket (4, 4a, 4b) comprises an electrical connection interface (7) for electrically connecting interchangeable accessory modules (5, 5a, 5b) to the platform (1),
wherein the mounting interface (6) and the connection interface (7) of the universal mounting bracket (4, 4a, 4b) are configured in such a way that, by mounting an interchangeable accessory module (5, 5a, 5b) on the platform (1) by means of the mounting interface (6), an electrical connection of the interchangeable accessory module (5, 5a, 5b) to the connection interface (7) can be established automatically.

6. The platform (1) according to one of the claims 1 to 5, wherein the column (3) is arranged perpendicular to the installation surface when the platform (1) is upright and the column (3) is telescopically height-adjustable.

7. The platform (1) according to any one of claims 1 to 6, further comprising a battery for electrically powering the platform (1) and/or a interchangeable accessory module (5, 5a, 5b) mounted on the platform (1).

8. The platform (1) according to any one of claims 1 to 7, wherein the base (2) has at least three feet (8, 8a, 8b), wherein a roller (9) is arranged on at least two feet (8, 8a, 8b), respectively, for displacing the platform (1) on the installation surface.

9. The platform (1) according to claim 8, wherein the feet (8, 8a, 8b) are each designed as legs with the same leg length pointing away from a connection with the column (3), wherein one or more feet (8, 8a, 8b) are pivotable relative to one or more other feet (8, 8a, 8b) about an axis perpendicular to the installation surface.

10. The platform (1) according to any one of claims 1 to 9, wherein the universal mounting bracket (4, 4a, 4b)
- is pivotally arranged on the column (3) or
- when the platform (1) is upright, is fixedly arranged on the column (3) horizontally or vertically in its main dimension with respect to the installation surface.

11. The platform (1) according to any one of claims 1 to 10, wherein the universal mounting bracket (4, 4a, 4b) comprises a coupling interface (10) for mechanical and/or electrical coupling with another universal mounting bracket (4, 4a, 4b) of another platform (1).

12. A variably adaptable piece of furniture (13, 13a, 13b) comprising a platform (1) according to any one of claims 1 to 11 and an interchangeable accessory module (5, 5a, 5b) which is mounted or mountable on the universal mounting bracket (4, 4a, 4b) of the platform (1) by means of the mounting interface (6).

13. The variably adaptable piece of furniture (13, 13a, 13b) according to claim 12, wherein the interchangeable accessory module (5, 5a, 5b) has at least one of the following functions:
- Accessory module (5, 5a, 5b) with a flat work surface,
- Accessory module (5, 5a, 5b) with a holder for a book, tablet computer or smartphone,
- Accessory module (5, 5a, 5b) with a translationally and/or rotationally movable surface element,
- Accessory module (5, 5a, 5b) with a mount according to a standard of the Video Electronics Standards Association (VESA),
- Accessory module (5, 5a, 5b) with a mechanical holder (19) for objects that can be mounted thereon,
- Accessory module (5, 5a, 5b) with an electrical accessory interface for connecting or coupling electrical devices,
- Accessory module (5, 5a, 5b) with a coupling interface (10) for mechanical and/or electrical coupling with a further accessory module (5, 5a, 5b),
- Accessory module (5, 5a, 5b) with integrated whiteboard,
- Accessory module (5, 5a, 5b) with integrated display,
- Accessory module (5, 5a, 5b) with integrated, electrical operating or control element (18),
- Accessory module (5, 5a, 5b) designed as a seat.

14. A set comprising at least one variably adaptable piece of furniture (13, 13a, 13b) according to claim 12 or 13 and a plurality of further such interchangeable accessory modules (5, 5a, 5b), each mountable by means of the mounting interface (6) to the universal mounting bracket (4, 4a, 4b) of the at least one platform (1).

15. A method of controlling a variably adaptable piece of furniture according to claim 12 or 13 or in accordance with a set according to claim 14,
wherein the identification interface (7) of the platform (1) automatically identifies the accessory module (5, 5a, 5b) mounted on the platform (1),
wherein the control unit obtains identification information about the accessory module (5, 5a, 5b) mounted on the platform (1), the identification information acquired by means of the identification interface (7) and
wherein the control unit controls an adaptation of the electrical functionality of the platform (1) depending on the obtained identification information.

## Revendications

1. Plate-forme (1) pour un meuble adaptable de manière variable (13, 13a, 13b), la plate-forme (1) comprenant une base (2) pour poser la plate-forme (1) sur une surface de pose, une colonne (3) ainsi qu'un support de montage universel (4, 4a, 4b) pour le montage de modules accessoires interchangeables (5, 5a, 5b),
dans lequel la colonne (3) est reliée à la base (2) et le support de montage universel (4, 4a, 4b) est disposé à une extrémité de la colonne (3) s'éloignant de la base (2),
dans lequel le support de montage universel (4, 4a, 4b) comprend une interface de montage mécanique (6) pour monter et démonter des modules d'accessoires interchangeables (5, 5a, 5b) sur la plate-forme (1),
la plate-forme (1) ayant une fonctionnalité électrique, et
**caractérisé en ce que**
la plate-forme (1) comporte une interface d'identification (7) pour identifier un module d'accessoire (5, 5a, 5b) monté sur la plate-forme (1) et une unité de commande, l'unité de commande étant agencée pour obtenir, au moyen de l'interface d'identification (7), des informations d'identification détectées concernant un module d'accessoire (5, 5a, 5b) monté sur la plate-forme (1) et pour commander une adaptation de la fonctionnalité électrique de la plate-forme (1) en fonction des informations d'identification obtenues.

2. Plate-forme (1) selon la revendication 1, dans laquelle la fonctionnalité électrique de la plate-forme (1) comprend une possibilité de réglage électrique de la hauteur de la colonne (3) .

3. Plate-forme (1) selon la revendication 2, dans laquelle un entraînement électrique est intégré dans la colonne (3) pour le réglage électrique de la hauteur de la colonne (3).

4. Plate-forme (1) selon la revendication 2 ou 3, dans laquelle l'unité de commande est agencée pour commander un ajustement automatique de la hauteur de la colonne (3) en fonction des informations d'identification reçues.

5. Plate-forme (1) selon l'une des revendications 1 à 4, dans laquelle le support de montage universel (4, 4a, 4b) comprend une interface de connexion électrique (7) pour connecter électriquement des modules accessoires interchangeables (5, 5a, 5b) à la plate-forme (1),
l'interface de montage (6) et l'interface de connexion (7) du support de montage universel (4, 4a, 4b) étant agencées de telle sorte que, par le montage d'un module accessoire interchangeable (5, 5a, 5b) sur la plate-forme (1) au moyen de l'interface de montage (6), une connexion électrique du module accessoire interchangeable (5, 5a, 5b) peut être établie de façon automatique avec l'interface de connexion (7) .

6. Plate-forme (1) selon l'une des revendications 1 à 5, dans laquelle la colonne (3) est disposée perpendiculairement à la surface d'installation lorsque la plate-forme (1) est installée et est réglable en hauteur de manière télescopique.

7. Plate-forme (1) selon l'une des revendications 1 à 6, comprenant en outre une batterie pour l'alimentation en énergie électrique de la plateforme (1) et/ou d'un module d'accessoires interchangeables (5, 5a, 5b) monté sur la plateforme (1).

8. Plateforme (1) selon l'une des revendications 1 à 7, dans laquelle la base (2) comporte au moins trois pieds (8, 8a, 8b), une roulette (9) étant disposée sur chacun d'au moins deux pieds (8, 8a, 8b) pour déplacer la plateforme (1) sur la surface d'installation.

9. Plate-forme (1) selon la revendication 8, dans laquelle les pieds (8, 8a, 8b) sont réalisés chacun sous forme de branches s'éloignant d'une liaison avec la colonne (3) et ayant la même longueur de branche,
un ou plusieurs pieds (8, 8a, 8b) pouvant pivoter par rapport à un ou plusieurs autres pieds (8, 8a, 8b) autour d'un axe perpendiculaire à la surface d'installation.

10. Plate-forme (1) selon l'une des revendications 1 à 9, dans laquelle le support de montage universel (4, 4a, 4b)
- est disposé de manière pivotante sur le montant (3) ou
- lorsque la plate-forme (1) est en place, est disposée de manière fixe sur la colonne (3) par rapport à la surface d'installation, horizontalement ou verticalement, dans sa dimension principale.

11. Plate-forme (1) selon l'une des revendications 1 à 10, dans laquelle le support de montage universel (4, 4a, 4b) comprend une interface de couplage (10) pour le couplage mécanique et/ou électrique avec un autre support de montage universel (4, 4a, 4b) d'une autre plate-forme (1).

12. Meuble adaptable de manière variable (13, 13a, 13b) comprenant une plate-forme (1) selon l'une des revendications 1 à 11 et un module accessoire interchangeable (5, 5a, 5b) monté ou pouvant être monté sur le support de montage universel (4, 4a, 4b) de la plate-forme (1) au moyen de l'interface de montage (6).

13. Meuble adaptable de manière variable (13, 13a, 13b) selon la revendication 12, dans lequel le module accessoire interchangeable (5, 5a, 5b) présente au moins une des fonctions suivantes :
- Module d'accessoires (5, 5a, 5b) avec une surface de travail plane,
- Module d'accessoires (5, 5a, 5b) avec un support pour un livre, une tablette ou un smartphone,
- Module d'accessoires (5, 5a, 5b) avec un élément de surface mobile en translation et/ou en rotation,
- Module d'accessoires (5, 5a, 5b) avec un support conforme à une norme de la Video Electronics Standards Association (VESA),
- Module d'accessoires (5, 5a, 5b) avec un support mécanique (19) pour des objets pouvant y être montés,
- Module d'accessoires (5, 5a, 5b) avec une interface d'accessoires électriques pour la connexion ou le couplage d'appareils électriques,
- Module accessoire (5, 5a, 5b) avec une interface de couplage (10) pour le couplage mécanique et/ou électrique avec un autre module accessoire (5, 5a, 5b),
- Module d'accessoires (5, 5a, 5b) avec tableau blanc intégré,
- Module d'accessoires (5, 5a, 5b) avec écran intégré,
- Module d'accessoires (5, 5a, 5b) avec élément de commande ou de contrôle électrique intégré (18),
- Module d'accessoires (5, 5a, 5b) réalisé sous forme de siège.

14. Ensemble comprenant au moins un meuble adaptable de manière variable (13, 13a, 13b) selon la revendication 12 ou 13 et une pluralité d'autres modules accessoires interchangeables de ce type (5, 5a, 5b), chacun pouvant être monté sur le support de montage universel (4, 4a, 4b) de ladite au moins une plate-forme (1) au moyen de l'interface de montage (6).

15. Procédé de commande d'un meuble adaptable de manière variable selon la revendication 12 ou 13 ou selon un ensemble selon la revendication 14,
dans lequel l'interface d'identification (7) de la plate-forme (1) identifie automatiquement le module accessoire (5, 5a, 5b) monté sur la plate-forme (1),
dans lequel l'unité de commande reçoit, au moyen de l'interface d'identification (7), des informations d'identification détectées concernant le module accessoire (5, 5a, 5b) monté sur la plate-forme (1), et
dans lequel l'unité de commande commande une adaptation de la fonctionnalité électrique de la plate-forme (1) en fonction des informations d'identification reçues.
